# EUROPEAN PATENT APPLICATION

(11) **EP 4 752 816 A1**
(43) Date of publication of application: **03.06.2026**
(21) Application number: 24871685.4
(22) Date of filing: 28.08.2024
(51) Int. Cl.: G06Q 50/04

(54) **INFORMATION PROCESSING SYSTEM AND INFORMATION PROCESSING METHOD**

(30) Priority: 29.09.2023 JP 2023170688
(71) Applicant: OMRON Corporation, Kyoto-shi, Kyoto 600-8530 (JP)
(72) Inventor: MUNETA, Yasuo, Kyoto-shi, Kyoto 600-8530 (JP); SASAKI, Jun, Kyoto-shi, Kyoto 600-8530 (JP); OKADA, Naoki, Kyoto-shi, Kyoto 600-8530 (JP)
(74) Representative: Isarpatent
(86) International application number: PCT/JP2024/030746
(87) International publication number: WO 2025/069884

(57) **Abstract**

An information processing system including a plurality of information processing terminals connected to each other through a communication network and configured to process information related to a product, the information processing system including: a first generation unit configured to generate product certification information that certifies product information, the product information including one or more pieces of product element information representing each element related to manufacture of the product; a first associating unit configured to associate a product ID with the product identified by the product ID, the product ID being associated with the product information certified by the product certification information and configured to identify the product; a first reception unit configured to receive a first output request, based on the product ID, the first output request being an output request for the product information; and a first output unit configured to output at least a part of the product information corresponding to the first output request.

## Description

### TECHNICAL FIELD

The present invention relates to an information processing system and an information processing method.

### BACKGROUND OF INVENTION

In recent years, with growing awareness of environmental issues, initiatives such as CO2 emissions trading schemes, carbon footprint disclosure, and promotion of the use of clean energy have been implemented in industry. Accordingly, there is a need to ascertain the total amount of energy used until each final product is manufactured and the proportion of clean energy used.

Here, in order to strictly calculate the total amount of energy used to manufacture each final product and the proportion of clean energy used to manufacture each final product, it is necessary to accurately ascertain information as to when and how, and using what equipment, the final product was manufactured. Specifically, accurate information is required on the amount of energy used involved in manufacturing components used in the final product (including the proportion of clean energy therein; the same applies hereinafter), the amount of energy used when manufacturing a manufacturing apparatus for manufacturing the product, and the amount of energy used in all manufacturing apparatuses (i.e., the production line) operated during manufacture of the final product.

However, when the basis for information about energy usage is unclear, or when the information has been (or may be) tampered with, the reliability of the calculated usage amount is impaired.

For example, regarding tamper resistance of information for distributed products and convenience in verifying such information, techniques for managing meta-information related to product quality using blockchain technology (e.g., PTL 1) and techniques for anonymously obtaining product information from product labels using blockchain technology (e.g., PTL 2) are known. In addition, it has been known to ensure product quality by obtaining authentication from an authentication organization for product specifications and indicating that the specifications are authenticated.

### CITATION LIST

### PATENT LITERATURE

Patent Document 1: JP 2020-113279 A
Patent Document 2: JP 2021-528720 T

### SUMMARY

### TECHNICAL PROBLEM

However, even with the above techniques, it is not possible to ascertain the total amount of energy used for each final product. This is a problem that arises regardless of whether the quality of the final product is guaranteed. For example, assume that a final product is manufactured at a factory using a plurality of production lines having different energy efficiencies; in such a case, the total amount of energy used differs depending on which production line the final product is manufactured on. That is, even if the factory where the final product was manufactured and the date and time of manufacture are disclosed, accurate information about the amount of energy used for manufacturing each final product cannot be ascertained unless the production line on which each final product was manufactured (i.e., the combination of manufacturing apparatuses used therein) is identified and such information is accurate.

Further, in addition to the issue of identifying the amount of energy used, there are needs such as restricting the producers of the manufacturing apparatus or software used to manufacture the final product (for example, setting the use of manufacturing apparatus or software from an affiliated manufacturer as a manufacturing condition, or excluding substandard products), and restricting the workers involved in the manufacturing of the final product or their working conditions (for example, preventing the manufacturing of products under poor working conditions); however, it is not possible to verify, based on the quality of the final product, whether such constraints have been complied with.

In view of the above-described problems, an object of the present invention is to provide a technique that can enable browsing of information about a product and each element related to the manufacture of the product, and support ensuring the authenticity of the information about the browsing.

### SOLUTION TO PROBLEM

To solve the above-described problems, for example, the present invention adopts the following configuration. An information processing system including a plurality of information processing terminals connected to each other through a communication network and configured to process information related to a product, the information processing system including:
a first generation unit configured to generate product certification information that certifies product information, the product information including one or more pieces of product element information representing each element related to manufacture of the product;
a first associating unit configured to associate a product ID with the product identified by the product ID, the product ID being associated with the product information certified by the product certification information and configured to identify the product;
a first reception unit configured to receive a first output request, based on the product ID, the first output request being an output request for the product information; and
a first output unit configured to output at least a part of the product information corresponding to the first output request.

Note that the "product" as used herein includes both a final product delivered to an end user and an intermediate product that constitutes a component of such a final product. In addition, "each element related to manufacture of a product" includes various types of information. Specifically, the element may include, for example, information about a manufacturing line related to manufacture of the product, information about the manufacturing date and time of the product, information about the manufacturer of the product, a manufacturing apparatus related to manufacture of the product (including sensor devices and the like), software related to manufacture of the product, an operator who manufactures the product, materials used in the product, an amount of energy consumed in manufacturing the product, an amount of CO2 emissions, and the like. Further, information for obtaining such information (e.g., an ID, a code, a URL address, and the like associated with the content of the information), rather than the information itself, also falls within the scope.

In addition, "certify product information" includes certifying the content of the product information, the creation date and time (update date and time), the creator of the product information, and the like. For example, when the above matters are authenticated by a public authentication organization or the like, the matters are thereby certified. In the present specification, both the terms "certification" and "authentication" mean guaranteeing authenticity of an object; however, "certification" is mainly used to indicate a state, and "authentication" is mainly used to indicate an act.

With the above configuration, it is possible to provide a system that enables the user of an information processing network to which a plurality of terminals are connected to output (browse) information about the product and each element related to the manufacture of the product, and supports ensuring the authenticity of the information about the browsing. Accordingly, for example, a general consumer can browse, from the consumer's own terminal, highly reliable product information (e.g., energy consumption involved in manufacturing the product, a producer, and the like) for which even underlying information (and transitions thereof) has been authenticated, and manufacturers, logistics operators, retailers, and the like can also acquire highly reliable product information from their respective terminals.

In the information processing system, at least one of the product information, the product certification information, or the product ID may be processed by a distributed ledger method. With such a configuration, a system with excellent tamper resistance with respect to information can be provided.

The product information may include, as the product element information, at least information about energy consumption related to the manufacture of the product. Here, information related to energy consumption may be, for example, an amount of energy consumption, an amount of CO2 emissions, or any index calculated using such information. Accordingly, the user can easily ascertain information related to energy consumption, such as the total amount of energy consumed for manufacturing the product and the amount of CO2 emissions.

The information processing system may further include:
a second generation unit configured to generate manufacturing line certification information that certifies manufacturing line information including one or more pieces of manufacturing element information representing each element constituting a manufacturing line related to the manufacture of the product;
a second associating unit configured to associate a manufacturing line ID with the manufacturing line identified by the manufacturing line ID, the manufacturing line ID being associated with the manufacturing line information certified by the manufacturing line certification information and configured to identify the manufacturing line;
a second reception unit configured to receive a second output request, based on the manufacturing line ID, the second output request being an output request for the manufacturing line information; and
a second output unit configured to output at least a part of the manufacturing line information corresponding to the second output request, in which
the product information may include at least the manufacturing line ID as the product element information.

Here, "each element constituting a manufacturing line" may include a manufacturing apparatus related to manufacture of the product (including sensor devices and the like), software related to manufacture of the product, information about the operator of the manufacturing line, an amount of energy consumed to manufacture one product, a type of energy used in the manufacturing line, and the like. Further, information for obtaining such information (e.g., an ID, a code, a URL address, and the like associated with the content of the information), rather than the information itself, also falls within the scope.

With such a configuration, the user can easily browse highly reliable information about each element related to the manufacturing line for manufacturing the product. Further, while excluding, as the content of the product information, the manufacturing line information itself of the manufacturing line that manufactured the product, a mechanism can be established that enables the content of the manufacturing line information to be referenced using, as a key, the manufacturing line ID corresponding to the manufacturing line information.

The manufacturing line information may include, as the manufacturing element information, at least information about a type of energy consumed in the manufacturing line. Here, the "type of energy" may be, for example, a distinction between specific power generation methods, or may be a simple distinction as to whether the energy is clean energy. In the case of a manufacturing line operated using energy of a plurality of types, information about the respective ratios may be included. Accordingly, the user can easily ascertain whether the product is manufactured using so-called clean energy such as renewable energy.

The information processing system may further include:
a third generation unit configured to generate manufacturing apparatus certification information that certifies manufacturing apparatus information including one or more pieces of information about a specification of the manufacturing apparatus constituting the manufacturing line;
a third associating unit configured to associate a manufacturing apparatus ID with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third reception unit configured to receive a third output request, based on the manufacturing apparatus ID, the third output request being an output request for the manufacturing apparatus information; and
a third output unit configured to output at least a part of the manufacturing apparatus information corresponding to the third output request, in which
the manufacturing line information may include at least the manufacturing apparatus ID as the manufacturing element information.

Here, the "specification of the manufacturing apparatus" may include information related to energy-saving performance of the manufacturing apparatus, information about components used in the manufacturing apparatus, information about software mounted on the manufacturing apparatus, information about the producer of the manufacturing apparatus, information about the manufacturing date and time of the manufacturing apparatus, and the like. Further, information for obtaining such information (e.g., an ID, a code, a URL address, and the like associated with the content of the information), rather than the information itself, also falls within the scope.

In this manner, the user can easily browse highly reliable information about specifications of the manufacturing apparatus for manufacturing the product. Further, while excluding, as the content of the manufacturing line information, the manufacturing apparatus information itself in the manufacturing line, a mechanism can be established that enables the content of the manufacturing apparatus information to be referenced using, as a key, the manufacturing apparatus ID corresponding to the manufacturing apparatus information.

The manufacturing apparatus information may include, as the specification of the manufacturing apparatus, at least information about energy-saving performance of the manufacturing apparatus. Here, the "energy-saving performance" may include, for example, an achievement rate with respect to a predetermined standard, energy consumption efficiency (e.g., energy consumption involved in manufacturing one product), and the like. In this manner, the user can easily ascertain the degree of energy-saving performance of the manufacturing apparatus used to manufacture the product, and further, the degree to which the product is manufactured with consideration for energy saving.

The information processing system may further include a control unit configured to control the manufacturing apparatus constituting the manufacturing line, in which the control unit need not operate the manufacturing apparatus to be controlled when the specification of the manufacturing apparatus to be controlled does not match a content certified by the manufacturing apparatus certification information associated with the manufacturing apparatus ID provided to the manufacturing apparatus or when each element constituting the manufacturing line where the manufacturing apparatus to be controlled belongs does not match a content certified by the manufacturing line certification information associated with the manufacturing line ID provided to the manufacturing line.

In this manner, if an unexpected specification change or a replacement of manufacturing devices occurs in the manufacturing line or the manufacturing apparatus, it is possible to prevent the product from being manufactured using the manufacturing line or the manufacturing apparatus that differs from the authenticated content. That is, with respect to the product information, it is possible to provide a system that not only has tamper resistance against the information itself (by means of the certification information) but also can prevent the content guaranteed by the certification information from being unintentionally changed (tampered with).

The information processing system may further include a fourth reception unit configured to receive an update of at least the product information on condition that an updater ID associated with a privilege for the update of at least the product information and configured to individually identify a user who performs the update is input, in which when the update is received, the fourth reception unit may add, to the product information, the updater ID of a user who has performed the update and an update time.

Here, "update" also includes simple addition of information. In addition, "update privilege" also includes the content of information that can be updated and the specification of the time period during which updating is permitted. With such a configuration, the user can update information in accordance with the update privilege for the information, and the record of the update is appended to the product information at the time of updating, and thus, a system can be realized that has excellent tamper resistance and is highly convenient.

A fifth reception unit configured to receive an input of a viewer ID associated with at least a browsing privilege for the product information and configured to individually identify a user who performs browsing may be provided, in which
when the fifth reception unit receives the input of the viewer ID, the first output unit may output the product information that is allowed to be browsed based on the browsing privilege associated with the viewer ID.

Here, the "browsing privilege" also includes the content of information that can be browsed and the specification of the time period during which browsing is permitted. With such a configuration, the user can easily browse information having content corresponding to the browsing privilege, while the provider of the information can determine to whom and what information is to be provided, and thus, a highly convenient system can be realized.

The present invention may encompass an information processing method for processing information related to a product, with a plurality of information processing terminals connected to each other through a communication network, the information processing method including:
a first generating step of generating product certification information that certifies product information, the product information including one or more pieces of product element information representing each element related to manufacture of the product; a first associating step of associating a product ID with the product identified by the product ID, the product ID being associated with the product information certified by the product certification information and configured to identify the product;
a first receiving step of receiving a first output request, based on the product ID, the first output request being an output request for the product information; and
a first outputting step of outputting at least a part of the product information corresponding to the first output request.

The information processing method may further include:
a second generating step of generating manufacturing line certification information that certifies manufacturing line information including one or more pieces of manufacturing element information representing each element constituting a manufacturing line related to the manufacture of the product;
a second associating step of associating a manufacturing line ID with the manufacturing line identified by the manufacturing line ID, the manufacturing line ID being associated with the manufacturing line information certified by the manufacturing line certification information and configured to identify the manufacturing line;
a second receiving step of receiving a second output request, based on the manufacturing line ID, the second output request being an output request for the manufacturing line information; and
a second outputting step of outputting at least a part of the manufacturing line information corresponding to the second output request, in which
the product information may include at least the manufacturing line ID as the product element information.

The information processing method may further include:
a third generating step of generating manufacturing apparatus certification information that certifies manufacturing apparatus information including one or more pieces of information about a specification of a manufacturing apparatus constituting the manufacturing line;
a third associating step of associating a manufacturing apparatus **ID** with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third receiving step of receiving a third output request, based on the manufacturing apparatus ID, the third output request being an output request for the manufacturing apparatus information; and
a third outputting step of outputting at least a part of the manufacturing apparatus information corresponding to the third output request, in which
the manufacturing line information may include at least the manufacturing apparatus ID as the manufacturing element information.

In addition, the present invention can also be understood as a program for causing a computer to execute the steps described in the above method, and as a computer-readable recording medium in which such a program is non-transitorily recorded.

Note that the above-described configurations and processes can be combined with each other to constitute the present invention as long as no technical inconsistency arises. In addition, in the present specification, numerals described as "first ...", "second ...", and the like are used merely to distinguish from other elements, and do not indicate any order or priority among the elements. In addition, each of the above invention-specifying matters does not necessarily need to be implemented as a separate configuration, and a single configuration may serve also as a plurality of invention-specifying matters.

### ADVANTAGEOUS EFFECTS OF INVENTION

According to the present invention, it is possible to provide a technique that can enable browsing of information about a product and each element related to the manufacture of the product, and support ensuring the authenticity of the information about the browsing.

### BRIEF DESCRIPTION OF THE DRAWINGS

[FIG. 1] FIG. 1 is a schematic view illustrating an outline of an information processing system according to Embodiment 1.
[FIG. 2] FIG. 2 is a block diagram schematically illustrating a hardware configuration of an authentication organization terminal according to Embodiment 1.
[FIG. 3] FIG. 3 is a block diagram schematically illustrating a functional configuration of the authentication organization terminal according to Embodiment 1.
[FIG. 4] FIG. 4 is an explanatory diagram illustrating an example of information stored in a storage unit of the authentication organization terminal according to Embodiment 1.
[FIG. 5] FIG. 5A is a first explanatory diagram illustrating an example of a database stored in the storage unit of the authentication organization terminal according to Embodiment 1. FIG. 5B is a second explanatory diagram illustrating an example of a database stored in the storage unit of the authentication organization terminal according to Embodiment 1. FIG. 5C is a third explanatory diagram illustrating an example of a database stored in the storage unit of the authentication organization terminal according to Embodiment 1.
[FIG. 6] FIG. 6 is a block diagram schematically illustrating a functional configuration of a product manufacturer terminal according to Embodiment 1.
[FIG. 7] FIG. 7 is an explanatory diagram illustrating details of a manufacturing line according to Embodiment 1.
[FIG. 8] FIG. 8 is a block diagram schematically illustrating a functional configuration of a manufacturing apparatus manufacturer terminal according to Embodiment 1.
[FIG. 9] FIG. 9 is a block diagram schematically illustrating a functional configuration of an update-privileged terminal according to Embodiment 1.
[FIG. 10] FIG. 10 is a block diagram schematically illustrating a functional configuration of a consumer terminal according to Embodiment 1.
[FIG. 11] FIG. 11 is a flowchart illustrating an outline of processing performed in the information processing system according to Embodiment 1.
[FIG. 12] FIG. 12 is a diagram illustrating a flow of processing and exchange of information between the manufacturing apparatus manufacturer terminal and the authentication organization terminal according to Embodiment 1.
[FIG. 13] FIG. 13 is a first diagram illustrating a flow of processing and exchange of information between the product manufacturer terminal and the authentication organization terminal according to Embodiment 1.
[FIG. 14] FIG. 14 is a flowchart illustrating an example of a flow of processing performed at the time of startup of a manufacturing line of the information processing system according to Embodiment 1.
[FIG. 15] FIG. 15 is a second diagram illustrating a flow of processing and exchange of information between the product manufacturer terminal and the authentication organization terminal according to Embodiment 1.
[FIG. 16] FIG. 16 is a diagram illustrating a flow of processing and exchange of information between the update-privileged terminal and the authentication organization terminal according to Embodiment 1.
[FIG. 17] FIG. 17 is a diagram illustrating a flow of processing and exchange of information between the consumer terminal and the authentication organization terminal according to Embodiment 1.
[FIG. 18] FIG. 18 is an explanatory diagram illustrating an example of a user ID input form generated by an information browsing request reception unit in Embodiment 1.
[FIG. 19] FIG. 19 is an explanatory diagram illustrating an example of an ID input form used in Modification 2 of Embodiment 1.
[FIG. 20] FIG. 20 is a schematic view illustrating an outline of an information processing system according to Embodiment 2.
[FIG. 21] FIG. 21 is a block diagram schematically illustrating a functional configuration of an authentication organization terminal according to Embodiment 2.

### DESCRIPTION OF EMBODIMENTS

### <Application Example>

An application example of the present invention is described below with reference to the drawings. An information processing system 1 according to this application example is an information processing system that aims to allow consumers to easily browse collective information about various elements related to the manufacture of a product distributed in the market (hereinafter referred to as "product information") and to ensure the authenticity of the information about the browsing. Examples of elements included in the product information may include, for example, the total amount of energy consumed in the manufacture of the product, the amount of CO2 emissions, the types of energy used in the manufacture of the product, the raw materials of the product, and the sources from which the raw materials are procured.

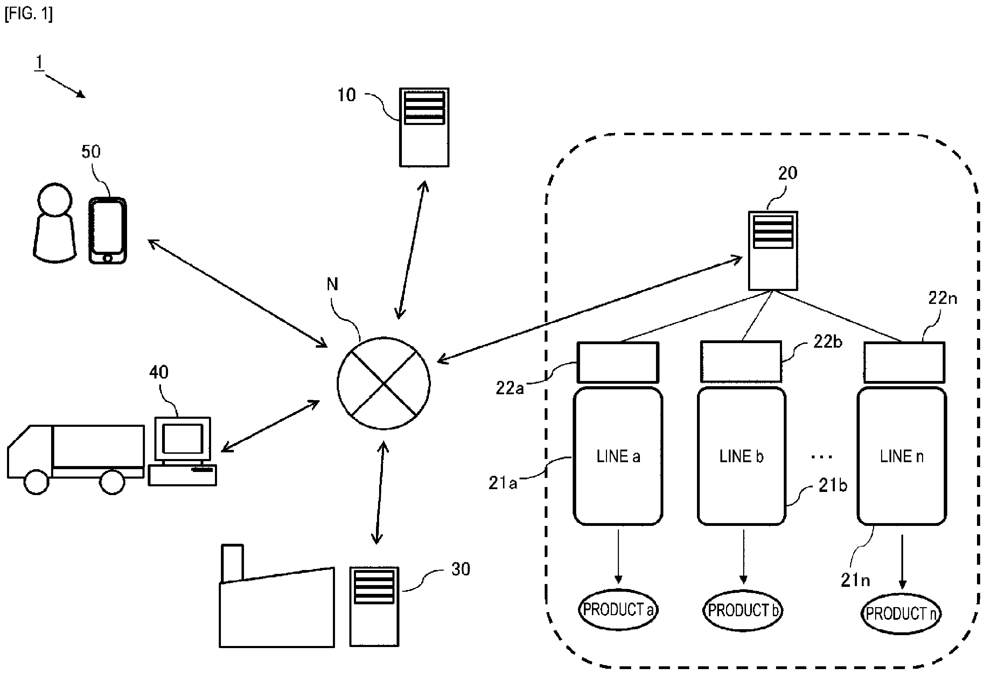

FIG. 1 is a schematic view illustrating a schematic configuration of the information processing system 1 according to this application example. As illustrated in FIG. 1, the information processing system 1 according to this application example includes a consumer terminal 50 owned by a consumer (purchaser of a product), a product manufacturer terminal 20 managed by the manufacturer of the product, an authentication organization terminal 10 managed by the organization that performs the authentication of the product information (hereinafter referred to as "authentication organization"), and the like, and these components are communicably connected through a communication network N.

The product manufacturer generates, at the product manufacturer terminal 20, product information of products it manufactures, and transmits it to the authentication organization terminal 10. Then, the authentication organization authenticates the transmitted product information, generates certification information that certifies the authenticated product information (hereinafter referred to as "product certification information") at the authentication organization terminal 10, associates it with the authenticated product information, and registers the authenticated product information in a database (DB).

Further, the authentication organization issues, by means of the authentication organization terminal 10, product identification information (hereinafter identification information is referred to as "ID") that is associated with the authenticated product information certified by the product certification information and identifies individual products. The issued product ID is transmitted to the product manufacturer terminal 20 through the communication network N.

At the product manufacturer, processing of associating the product ID issued by the product manufacturer terminal 20 with each product is performed, thereby completing the association among a single product, the product ID and the authenticated product information. More specifically, the association with the product may be performed by engraving the product ID (e.g., as a serial number) on the product, or outputting a label on which the product ID is printed (to attach the label to the product). In addition, information including the product ID may be encoded into a barcode, a QR code (trade name), or the like, and the code may be attached to the product.

A consumer makes a browsing request for product information using, as a key, the product ID (or a code in which the product ID is encoded) attached to the product obtained by the consumer, through the consumer terminal 50. Specifically, the consumer transmits a browsing request for product information to the authentication organization terminal 10 through the communication network N by, for example, accessing a portal site provided by the authentication organization and inputting the product ID or decoding the code attached to the product.

When receiving a browsing request from the consumer terminal 50, the authentication organization terminal 10 extracts at least a part of the product information corresponding to the browsing privilege of the consumer (e.g., the amount of CO2 emissions related to the manufacture of the product, and the raw materials of the product) from the DB, and transmits it to the consumer terminal 50. Then, the consumer terminal 50, having acquired the information through the communication network N, generates and outputs a product information browsing screen.

In this manner, the consumer can easily browse at least a part of the product information of the product obtained by the consumer. In addition, the product information is authenticated by the authentication organization, and thus the authenticity of the product information to be browsed can be ensured.

### <Embodiment 1>

A specific embodiment of the present invention is described below in more detail. It should be noted that unless otherwise specified, the components, processes, and the like described in the following embodiment are not intended to limit the scope of the present invention to those alone.

### (Overview of System)

An information processing system 1 according to Embodiment 1 is the same as the information processing system 1 according to the application example. Specifically, as illustrated in FIG. 1, the information processing system 1 according to the present embodiment includes the authentication organization terminal 10, the product manufacturer terminal 20, a manufacturing apparatus manufacturer terminal 30, an update-privileged terminal 40, and the consumer terminal 50, and these components are communicably connected through the communication network N. In addition, the information processing system 1 according to the present embodiment includes one or more control apparatuses 22 communicably connected to the product manufacturer terminal 20 and configured to control the manufacturing apparatus of the product. Note that there may also be a plurality of the product manufacturer terminals 20, the manufacturing apparatus manufacturer terminals 30, the update-privileged terminals 40, and the consumer terminals 50.

### (Configuration of Authentication Organization Terminal)

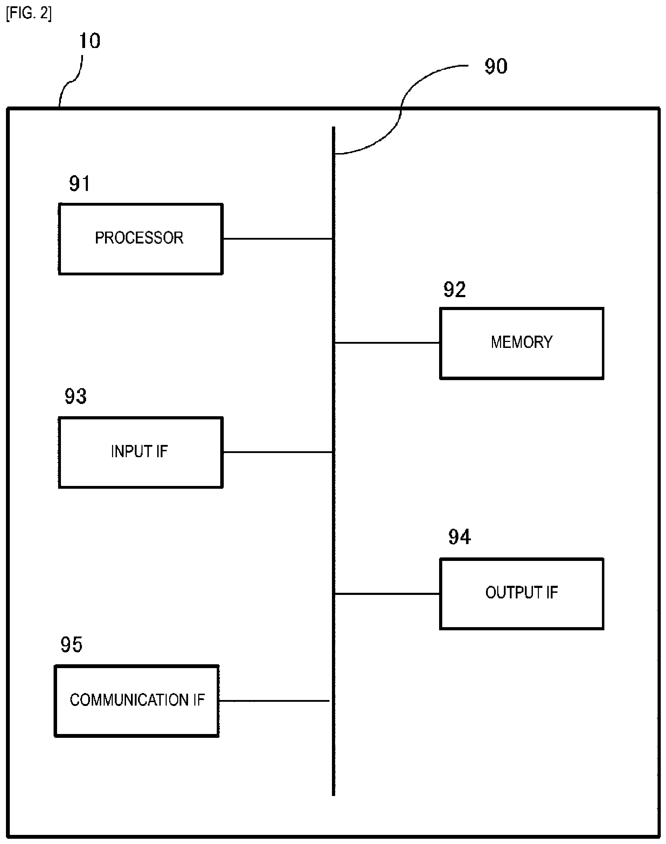

First, the authentication organization terminal 10 is described. A common server computer or the like may be adopted for the authentication organization terminal 10, for example. FIG. 2 is a block diagram schematically illustrating a hardware configuration of the authentication organization terminal 10. As described above, the authentication organization terminal 10 is an information processing terminal managed by the authentication organization, and includes, as its components, a processor 91, a memory 92, an input interface (IF) 93, an output IF 94, and a communication IF 95 mutually connected through a connection bus 90, as illustrated in FIG. 2.

Any arithmetic processing apparatus such as a central processing unit (CPU), a micro-processing unit (MPU), and a digital signal processor (DSP) may be adopted for the processor 91, for example.

Although not illustrated in the drawings, the memory 92 includes a main storage apparatus such as a flash memory, a random access memory (RAM) and a read only memory (ROM), and an auxiliary storage apparatus such as a solid state drive (SSD), an erasable programmable ROM (EPROM), a flash memory, a USB memory, and a secure digital (SD) memory card. The memory 92 stores information such as programs executed by the processor 91, data processed by the processor 91, setting information of operations, and various DBs described below. When the program stored in the memory 92 is executed by the processor 91 such that each configuration of the authentication organization terminal 10 is controlled, functional units that achieve predetermined purposes can be implemented.

Examples of the input IF 93 may include various input devices such as a keyboard, a mouse, a camera, and a microphone, for example. In addition, examples of the output IF 94 may include various output devices such as a display, a speaker, and a printer. In addition, it is also possible to adopt a touch panel display as a configuration serving both as the input IF 93 and the output IF. An appropriate configuration may be adopted for the communication IF 95 in accordance with the connection method (wired or wireless, connection standard, and the like) with the communication network N to be connected.

### (Functional Configuration of Authentication Organization Terminal 10)

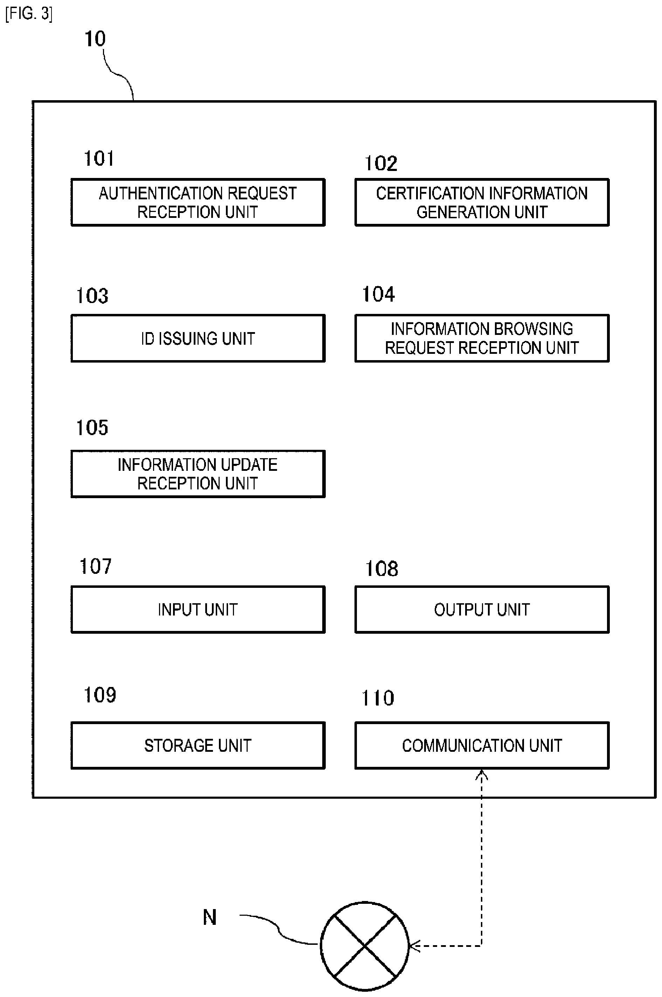

FIG. 3 is a block diagram schematically illustrating a functional configuration of the authentication organization terminal 10. As illustrated in FIG. 3, the authentication organization terminal 10 includes functional units, namely an authentication request reception unit 101, a certification information generation unit 102, an ID issuing unit 103, an information browsing request reception unit 104, an information update reception unit 105, an input unit 107, an output unit 108, a storage unit 109, and a communication unit 110.

The authentication request reception unit 101 receives authentication requests for product information, collective information of manufacturing element information representing each element constituting a manufacturing line of a product (hereinafter referred to as "manufacturing line information"), and information related to the specification of each manufacturing apparatus installed on the manufacturing line (hereinafter referred to as "manufacturing apparatus information") as described below. More specifically, authentication requests are received when the product information, the manufacturing line information, and the manufacturing apparatus information related to the authentication requests are received from the product manufacturer terminal 20 and the manufacturing apparatus manufacturer terminal 30 through the communication network N.

The certification information generation unit 102 generates each of product certification information that certifies the product information related to the authentication, manufacturing line certification information that certifies the manufacturing line information related to the authentication, and manufacturing apparatus certification information that certifies the manufacturing apparatus information related to the authentication. Specifically, in the present embodiment, the certification information generation unit 102 also serves as the first generation unit, the second generation unit, and the third generation unit according to the present invention. With the generation of the certification information, the content and authenticity of the product information, the manufacturing line information, and the manufacturing apparatus information are guaranteed by the authentication organization.

The ID issuing unit 103 issues various IDs. More specifically, it issues IDs such as a user ID for individually identifying the user of the information processing system 1, a product ID for individually identifying the product, a manufacturing line ID for individually identifying the manufacturing line, and a manufacturing apparatus ID for individually identifying the manufacturing apparatus.

The user ID issued by the ID issuing unit 103 is associated with the update privilege (approval or disapproval of information update, the range of update and the timing of update) and the browsing privilege (the range of the information allowed for browsing and the timing of browsing) for the product information, the manufacturing line information, and the manufacturing apparatus information stored in the DB described below.

In addition, the product ID issued by the ID issuing unit 103 is associated with the product information certified by the product certification information, and thus the corresponding product information can be accessed based on the product ID. The same applies to the manufacturing line ID and the manufacturing apparatus ID, and they are associated with the authenticated manufacturing line information and manufacturing apparatus information, respectively.

The information browsing request reception unit 104 receives browsing requests for the authenticated product information, the manufacturing line information, and the manufacturing apparatus information. The information browsing request reception unit 104 receives a browsing request for corresponding information from any of the terminals connected through the communication network N using the product ID, the manufacturing line ID, and the manufacturing apparatus ID as the key, and requests transmission of the user ID, for example. Then, the information corresponding to the browsing privilege set for the user ID is transmitted to the terminal that has made the browsing request through the communication unit 110 described below. Specific processing at this time will be described below. Note that in the present embodiment, the information browsing request reception unit 104 also serves as the first reception unit, the second reception unit, the third reception unit, and the fifth reception unit according to the present invention.

On condition that the user ID of the user having the update privilege for at least one of the product information, the manufacturing line information, or the manufacturing apparatus information is input, the information update reception unit 105 receives an update of these types of information stored in the DB. The information update reception unit 105 receives an update request for corresponding information from any of the terminals connected through the communication network N using the product ID, the manufacturing line ID, and the manufacturing apparatus ID as the key, and requests transmission of the user ID, for example. Then, it transmits an information update user interface (UI) corresponding to the update privilege set for the user ID to the terminal that has made the update request. When receiving the information update through the information update UI, the information update reception unit 105 updates the information of the DB, and appends the update date and time and the user ID of the updater in the DB. Specifically, in the present embodiment, the information update reception unit 105 corresponds to the fourth reception unit according to the present invention. Note that the term "update" herein includes not only overwriting (rewriting) of information, but also appending information.

The input unit 107 is implemented by the above-described input IF 93, and transmits various input signals input through various input devices to the processor 91. In addition, the output unit 108 is implemented by the above-described output IF 94, and outputs various information by means of an output device such as a display. The communication unit 110 is implemented by the communication IF 95, and performs information communication with another terminal in the system through the communication network N.

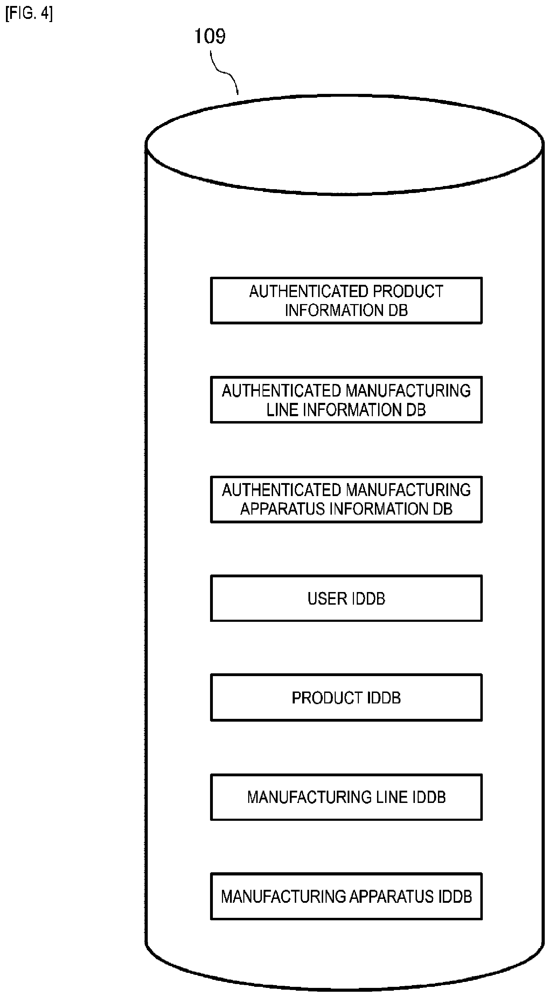

The storage unit 109 is implemented by the above-described memory 92, and stores various information. FIG. 4 illustrates an example of information held by the storage unit 109. As illustrated in FIG. 4, the storage unit 109 stores various DBs such as an authenticated product information DB, an authenticated manufacturing line DB, an authenticated manufacturing apparatus DB, a user IDDB, a product IDDB, a manufacturing line IDDB, and a manufacturing apparatus IDDB.

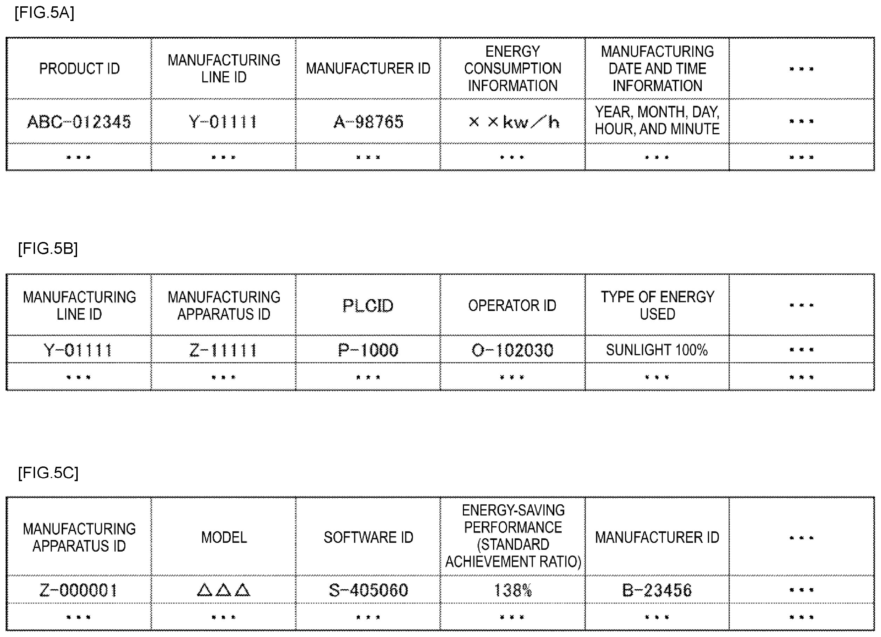

The authenticated product information DB stores the product information that has been received from the product manufacturer terminal 20 and for which certification information has been generated. FIG. 5A illustrates an example of the authenticated product information DB. As illustrated in FIG. 5A, the authenticated product information DB includes a product ID, an ID of the manufacturing line where the product has been manufactured, a manufacturer ID (information for identifying the product manufacturer), information about energy consumption related to the manufacture of the product, information about the manufacturing date, and the like, for example.

The authenticated manufacturing line DB stores the manufacturing line information received from the product manufacturer terminal 20 and for which certification information has been generated. FIG. 5B illustrates an example of authenticated manufacturing line information DB. As illustrated in FIG. 5B, the authenticated manufacturing line information DB includes a manufacturing line ID, an ID of the manufacturing apparatus included in the manufacturing line, an ID of the control apparatus that controls the manufacturing line, an ID for identifying the operator of the manufacturing line, information about the type of energy used in the manufacturing line, and the like, for example.

An authenticated manufacturing apparatus information DB stores the manufacturing apparatus information that is received from the manufacturing apparatus manufacturer terminal 30 and for which certification information has been generated. FIG. 5C illustrates an example of the authenticated manufacturing apparatus information DB. As illustrated in FIG. 5C, the authenticated manufacturing apparatus information DB includes a manufacturing apparatus ID, the type (model) of the manufacturing apparatus, an ID of the software mounted on the manufacturing apparatus, energy-saving performance of the manufacturing apparatus, a manufacturer ID (information for identifying the manufacturing apparatus manufacturer), and the like, for example.

The user IDDB, the product IDDB, the manufacturing line IDDB, and the manufacturing apparatus IDDB store information about a pair of the ID issued by the ID issuing unit 103 and the user, product, manufacturing line, and manufacturing apparatus, respectively.

### (Product Manufacturer Terminal)

Next, the product manufacturer terminal 20 is described. The product manufacturer terminal 20, which is a terminal managed by the product manufacturer, is communicably connected to another terminal in the system through the communication network N as illustrated in FIG. 1, and connected to the control apparatuses 22a, 22b ... 22n provided in a plurality of manufacturing lines 21a, 21b ... 21n, respectively. Note that in the following description, the plurality of manufacturing lines and control apparatuses will be simply referred to as manufacturing line 21, control apparatus 22 or the like unless distinction is necessary.

As with the authentication organization terminal 10, a common server computer and the like may be used for the product manufacturer terminal 20. Specifically, although not illustrated in the drawings, it includes a processor, a memory, an input IF, an output IF, a communication IF and the like as a hardware configuration as with the authentication organization terminal 10.

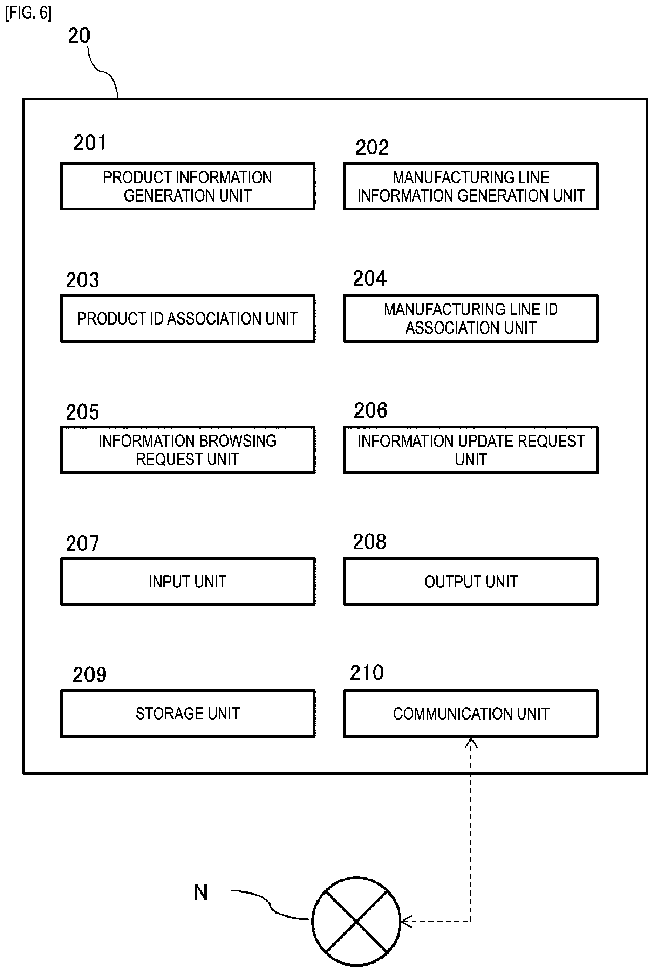

FIG. 6 is a block diagram schematically illustrating a functional configuration of the product manufacturer terminal 20. As illustrated in FIG. 6, the product manufacturer terminal 20 includes functional units, namely a product information generation unit 201, a manufacturing line information generation unit 202, a product ID association unit 203, a manufacturing line ID association unit 204, an information browsing request unit 205, an information update request unit 206, an input unit 207, an output unit 208, a storage unit 209, and a communication unit 210.

The input unit 207, the output unit 208, and the communication unit 210 are the same as those of the authentication organization terminal 10, and the storage unit 209 is also the same as the storage unit 109 of the authentication organization terminal 10 except that a DB such as the authenticated product information DB is not held. Therefore, descriptions thereof will be omitted.

When the product manufacturer manufactures a new product, the product information generation unit 201 generates product information of the product. Since examples of the content of product information have been described above, redundant description will be omitted. When obtaining authentication for the generated product information from the authentication organization, the product manufacturer terminal 20 transmits the product information to the authentication organization terminal 10 through the communication unit 210.

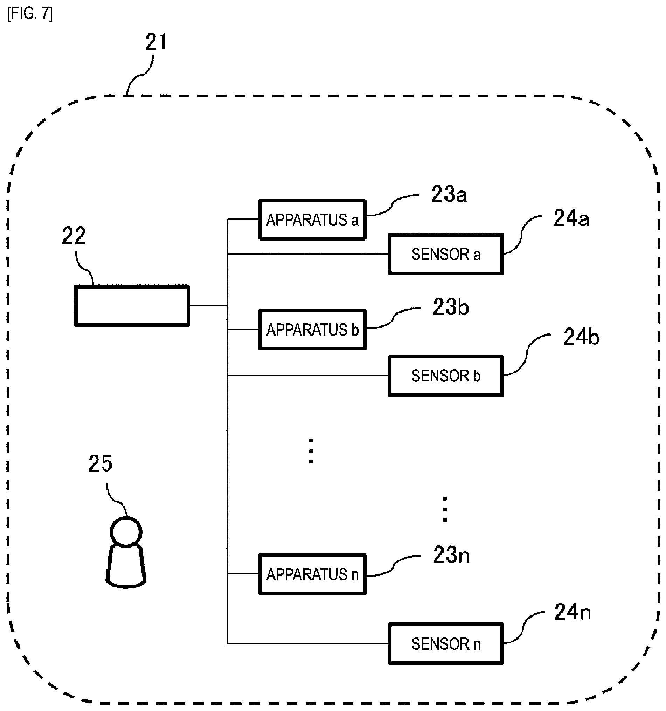

When the product manufacturer constructs a new manufacturing line 21, the manufacturing line information generation unit 202 generates manufacturing line information about the manufacturing line. FIG. 7 is an explanatory diagram illustrating an example of manufacturing elements included in the manufacturing line 21. As illustrated in FIG. 7, examples of the manufacturing element information in the manufacturing line 21 may include a plurality of manufacturing apparatuses 23a, 23b ... 23n related to the manufacture of the product, a plurality of sensor devices 24a, 24b ... 24n, the control apparatus 22 that connects the manufacturing apparatuses and the sensor devices and controls the manufacturing apparatuses 23a, 23b ... 23n, and a line operator 25 of the manufacturing line 21. Note that in the following description, the plurality of manufacturing apparatuses and sensor devices will be simply referred to as manufacturing apparatus 23, sensor device 24 or the like unless distinction is necessary.

The control apparatus 22 may be a programmable logic controller (PLC), for example. The control apparatus 22 controls the manufacturing apparatus 23, and as described below, when information about the manufacturing elements in the manufacturing line 21 is collected and their contents do not match the content authenticated by the authentication organization, the control apparatus 22 notifies an error and performs processing to prevent the manufacturing apparatus 23 from operating.

Note that in the case where manufacturing apparatus information including the specification information of the manufacturing apparatus 23 included in the manufacturing line 21 is required when generating the manufacturing line information, the required information is acquired through the communication unit 210, the input unit 207 and the like. For example, in the case where the manufacturing apparatus 23 is an off-the-shelf product for the manufacture at the manufacturing apparatus manufacturer, the manufacturing apparatus information may be acquired by making an inquiry, using the manufacturing apparatus ID as the key, for the manufacturing apparatus information about the relevant manufacturing apparatus to the authentication organization terminal 10 (or the manufacturing apparatus manufacturer terminal 30) through the communication unit 210. Alternatively, in the case where the manufacturing apparatus 23 is proprietary to the product manufacturer, the manufacturing apparatus information may be acquired by displaying a UI display prompting input of the manufacturing apparatus information at the output unit 208, and receiving input of the information from the user through the input unit 207, for example.

The product ID association unit 203 performs processing of associating the product ID issued from the authentication organization terminal 10 with the individual product identified by the product ID. Specifically, the product ID association unit 203 corresponds to the first associating unit according to the present invention. Specifically, association among the product, the product ID and the authenticated product information is completed when the product ID is attached to the product by, for example, engraving the product ID (or a code obtained by encoding information including the product ID) on the individual product, or outputting a label on which the product ID is printed. As such, the association between the product ID and the product may be made in such a manner that when the product ID is actually attached to the product, information indicating that fact is transmitted to the authentication organization terminal 10, thereby updating the information of the authenticated product information DB.

The manufacturing line ID association unit 204 performs processing of associating the manufacturing line ID issued from the authentication organization terminal 10 with the individual manufacturing line identified by the manufacturing line ID. Specifically, in the present embodiment, the manufacturing line ID association unit 204 corresponds to the second associating unit according to the present invention. Specifically, for example, when the product manufacturer provides the individual manufacturing line with the manufacturing line ID, the association among the manufacturing line, the manufacturing line ID and the authenticated manufacturing line information is completed. As such, the association between the manufacturing line ID and the product may be made in such a manner that when the manufacturing line is actually provided with the manufacturing line ID, information indicating that fact is transmitted to the authentication organization terminal 10, thereby updating the information of the authenticated product information DB.

The information browsing request unit 205 requests browsing of at least one of the product information, the manufacturing line information, or the manufacturing apparatus information authenticated at the authentication organization terminal 10 and stored in the storage unit 109 of the authentication organization terminal 10 in association with the certification information. More specifically, it transmits a browsing request for information to the authentication organization terminal 10, and requests browsing of information associated with any of the product ID, the manufacturing line ID, and the manufacturing apparatus ID using the ID as the key through the reception processing of the information browsing request reception unit 104. Note that inputting the user ID (and the corresponding password) upon making a browsing request for information allows browsing of the information within the range of the privilege associated with the user ID.

The information update request unit 206 performs processing for updating at least one of the authenticated product information DB or the authenticated manufacturing line information DB stored in the storage unit 109 of the authentication organization terminal 10. More specifically, the information to be updated is registered by transmitting a request for information update to the authentication organization terminal 10, and receiving provision of the UI for the information update, using the product ID or the manufacturing line ID as the key, for example.

### (Manufacturing Apparatus Manufacturer Terminal)

Next, the manufacturing apparatus manufacturer terminal 30 is described. The manufacturing apparatus manufacturer terminal 30 is a terminal managed by the manufacturing apparatus manufacturer, and is communicably connected to another terminal in the system through the communication network N as illustrated in FIG. 1.

As with the authentication organization terminal 10, a common server computer and the like may be used for the manufacturing apparatus manufacturer terminal 30. Specifically, although not illustrated in the drawings, it includes a processor, a memory, an input IF, an output IF, a communication IF and the like as a hardware configuration as with the authentication organization terminal 10.

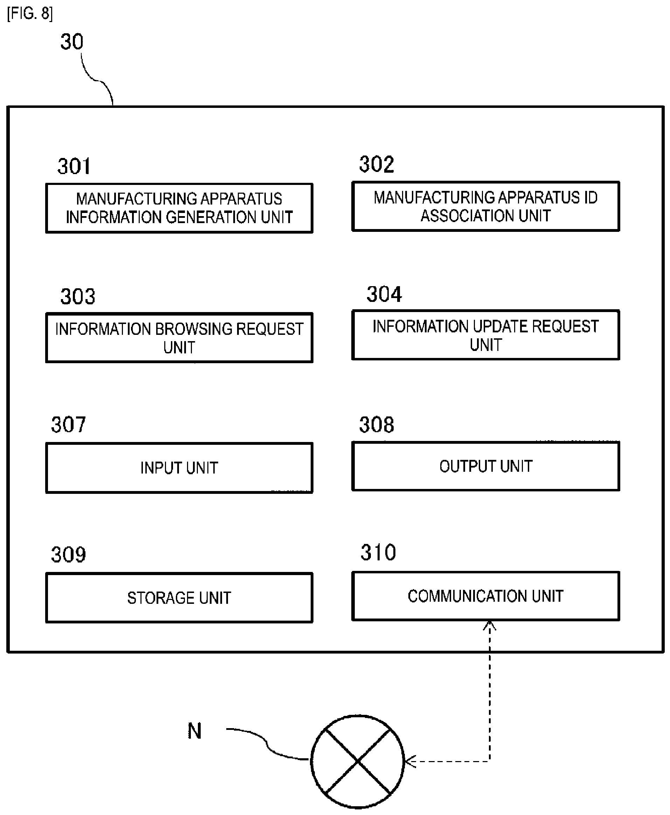

FIG. 8 is a block diagram schematically illustrating a functional configuration of the manufacturing apparatus manufacturer terminal 30. As illustrated in FIG. 8, the manufacturing apparatus manufacturer terminal 30 includes functional units, namely a manufacturing apparatus information generation unit 301, a manufacturing apparatus ID association unit 302, an information browsing request unit 303, an information update request unit 304, an input unit 307, an output unit 308, a storage unit 309, and a communication unit 310.

The input unit 307, the output unit 308, and the communication unit 310 are the same as those of the authentication organization terminal 10, and the storage unit 309 is also the same as the storage unit 109 of the authentication organization terminal 10 except that a DB such as the authenticated product information DB is not held. Therefore, descriptions thereof will be omitted.

When the manufacturing apparatus manufacturer manufactures a new manufacturing apparatus, the manufacturing apparatus information generation unit 301 generates manufacturing apparatus information of the manufacturing apparatus. The manufacturing apparatus information is a set of information about the specification of the manufacturing apparatus, and includes the type (model) of the manufacturing apparatus, information about the energy-saving performance of the manufacturing apparatus, information about the components and raw materials used in the manufacturing apparatus, information about software mounted on the manufacturing apparatus, information about the manufacturer of the manufacturing apparatus, and the like, for example. When obtaining authentication for the generated manufacturing apparatus information from the authentication organization, the manufacturing apparatus manufacturer terminal 30 transmits the manufacturing apparatus information to the authentication organization terminal 10 through the communication unit 310.

The manufacturing apparatus ID association unit 302 performs processing of associating the manufacturing apparatus ID issued from the authentication organization terminal 10 with the individual manufacturing apparatus identified by the manufacturing apparatus ID. Specifically, in the present embodiment, the manufacturing apparatus ID association unit 302 corresponds to the third associating unit according to the present invention. Specifically, the association among the manufacturing apparatus, the manufacturing apparatus ID and the authenticated manufacturing apparatus information is completed when the manufacturing apparatus ID is attached to the manufacturing apparatus by, for example, engraving the manufacturing apparatus ID (or code obtained by encoding information including the manufacturing apparatus ID) on the individual manufacturing apparatus, or outputting a label on which the manufacturing apparatus ID is printed. As such, the association between the manufacturing apparatus ID and the product may be made in such a manner that when the manufacturing apparatus ID is actually attached to the manufacturing apparatus, information indicating that fact is transmitted to the authentication organization terminal 10, thereby updating the information of the authenticated manufacturing apparatus information DB.

The information browsing request unit 303 requests browsing of at least one of the product information, the manufacturing line information, or the manufacturing apparatus information authenticated at the authentication organization terminal 10 and stored in the storage unit 109 of the authentication organization terminal 10 in association with the certification information. More specifically, it transmits a browsing request for information to the authentication organization terminal 10, and requests browsing of information associated with any of the product ID, the manufacturing line ID, and the manufacturing apparatus ID using the ID as the key through the reception processing of the information browsing request reception unit 104. Note that inputting the user ID (and the corresponding password) upon making a browsing request for information allows browsing of the information within the range of the privilege associated with the user ID.

The information update request unit 304 performs processing for updating at least the information of the authenticated manufacturing apparatus DB stored in the storage unit 109 of the authentication organization terminal 10. More specifically, the information to be updated is registered by transmitting a request for information update to the authentication organization terminal 10, and receiving provision of the UI for the information update, using the manufacturing apparatus ID as the key, for example.

### (Update-Privileged Terminal)

Next, the update-privileged terminal 40 is described. The update-privileged terminal 40 is a terminal that manages the user provided with at least the update privilege for the product information, and is communicably connected to another terminal in the system through the communication network N as illustrated in FIG. 1. Here, the user provided with the update privilege for the product information is, for example, a business operator involved in the distribution of the product, such as a logistics operator, a wholesaler, and a retailer. The product reaches the consumer via these business operators, but since changes in the condition of the product may occur during that process, or it may become necessary to append information about the whereabouts of the product, the update-privileged terminal 40 has a function to reflect such information in the authenticated product information DB.

A general-purpose computer system may be used for the update-privileged terminal 40. Specifically, although not illustrated in the drawings, it includes a processor, a memory, an input IF, an output IF, a communication IF and the like as a hardware configuration as with the authentication organization terminal 10.

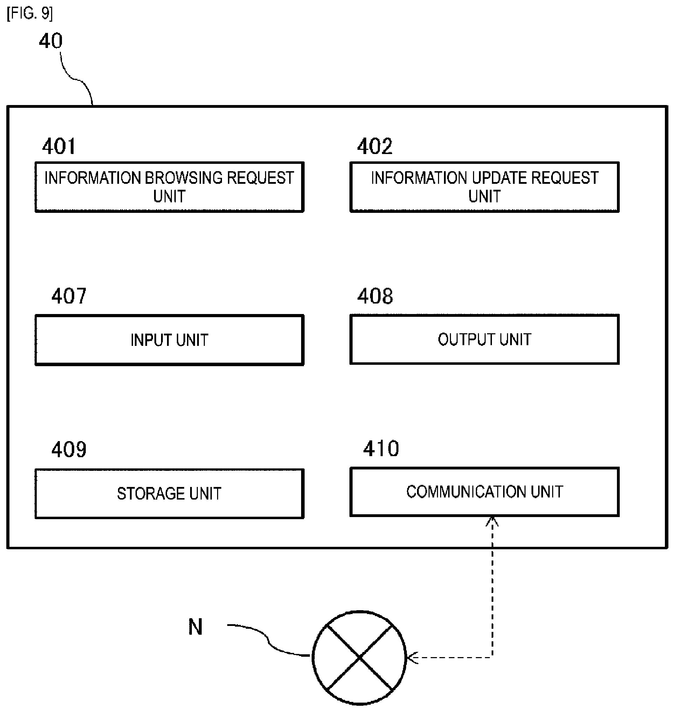

FIG. 9 is a block diagram schematically illustrating a functional configuration of the update-privileged terminal 40. As illustrated in FIG. 9, the update-privileged terminal 40 includes functional units, namely an information browsing request unit 401, an information update request unit 402, an input unit 407, an output unit 408, a storage unit 409, and a communication unit 410.

The input unit 407, the output unit 408, and the communication unit 410 are the same as those of the authentication organization terminal 10, and the storage unit 409 is also the same as the storage unit 109 of the authentication organization terminal 10 except that a DB such as the authenticated product information DB is not held. Therefore, descriptions thereof will be omitted.

The information browsing request unit 401 makes a browsing request for product information that is authenticated at least at the authentication organization terminal 10 and stored in the storage unit 109 of the authentication organization terminal 10 in association with the certification information. More specifically, it transmits a browsing request for information to the authentication organization terminal 10, and requests browsing of information associated with the product ID using the product ID as the key through the reception processing of the information browsing request reception unit 104. Note that inputting the user ID (and the corresponding password) upon making a browsing request for information allows browsing of the information within the range of the privilege associated with the user ID.

The information update request unit 402 performs processing for updating at least the information of the authenticated product information DB stored in the storage unit 109 of the authentication organization terminal 10. More specifically, the information to be updated is registered by transmitting a request for information update to the authentication organization terminal 10, and receiving provision of the UI for the information update, using the product ID as the key, for example. For example, when the product is transported, a transportation provider as a business operator provided with the update privilege for product information appends, to the product information in the authenticated product information DB, information such as the transportation route and CO2 emissions during the transportation.

### (Consumer Terminal)

Next, the consumer terminal 50 is described. The consumer terminal 50 is a terminal owned by a general consumer, and is communicably connected to another terminal in the system through the communication network N as illustrated in FIG. 1. A general-purpose terminal may be used for the consumer terminal 50, and the present embodiment describes an example in which the consumer terminal 50 is a smartphone. It should be noted that it is not limited to a smartphone and may instead be another type of mobile information terminal, a desktop computer, or a smart display. In any case, the consumer terminal 50 also includes a processor, a memory, an input IF, an output IF, a communication IF and the like as a hardware configuration.

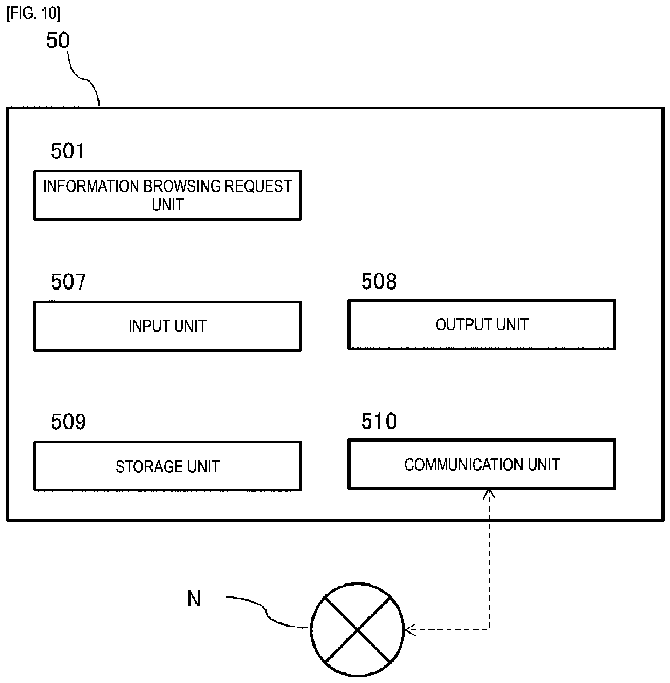

FIG. 10 is a block diagram schematically illustrating a functional configuration of the consumer terminal 50. As illustrated in FIG. 10, the consumer terminal 50 includes functional units, namely an information browsing request unit 501, an input unit 507, an output unit 508, a storage unit 509, and a communication unit 510. The input unit 507, the output unit 508, and the communication unit 510 are the same as those of the authentication organization terminal 10, and the storage unit 509 is also the same as the storage unit 109 of the authentication organization terminal 10 except that a DB such as the authenticated product information DB is not held. Therefore, descriptions thereof will be omitted.

The information browsing request unit 501 makes a browsing request for product information that is authenticated at least at the authentication organization terminal 10 and stored in the storage unit 109 of the authentication organization terminal 10 in association with the certification information. More specifically, it transmits a browsing request for information to the authentication organization terminal 10, and requests browsing of information associated with the product ID using the product ID as the key through the reception processing of the information browsing request reception unit 104.

Inputting the user ID (and the corresponding password) upon making a browsing request for information allows browsing of the information within the range of the privilege associated with the user ID. Note that typically, a general consumer who obtained a product is not provided with a user ID, but the basic information about the product can be browsed even without a user ID.

For example, when information including a product ID is encoded and attached to a product in the form of a code such as a QR code (tradename), it is possible to automatically perform a process in which the code is captured with the camera functioning as the input unit 507 of the consumer terminal 50 so as to decode the information including the product ID, acquire product information (a portion of basic content) corresponding to the product ID by transmitting an information browsing request to the authentication organization terminal 10, and display the acquired information on the display functioning as the output unit 508. With such a mechanism, even a general consumer who has no knowledge of the configuration of the information processing system 1 can browse basic product information simply by reading the code attached to the product using the camera, thereby improving consumer convenience.

### (Flow of Information Processing)

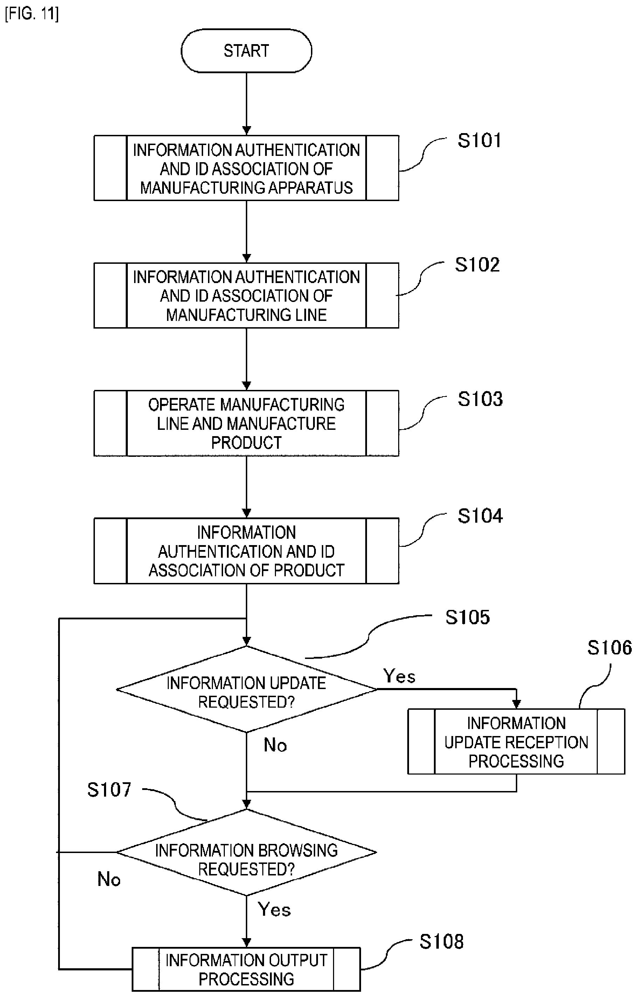

Next, a flow of information processing performed in the information processing system 1 according to the present embodiment is described below with reference to FIGS. 11 to 17. FIG. 11 is a flowchart illustrating an outline of processing performed in the information processing system 1. As illustrated in FIG. 11, the information processing system 1 executes a step of performing processing of authentication of the manufacturing apparatus information and association of the manufacturing apparatus ID (S101), a step of performing processing of authentication of the manufacturing line information and association of the manufacturing line ID (S102), a step of manufacturing a product by operating the manufacturing line at the product manufacturer (S103), a step of performing processing of authentication of the product information and association of the product ID (S104), a step of determining whether an update request for information stored in the DB has been made to the authentication organization terminal 10 (S105), a step of performing processing of reception of information update (S106), a step of determining whether a browsing request for information stored in the DB has been made to the authentication organization terminal 10 (S107), and a step of outputting information about the browsing request (S108). A flow of processing performed in each step is described below in more detail.

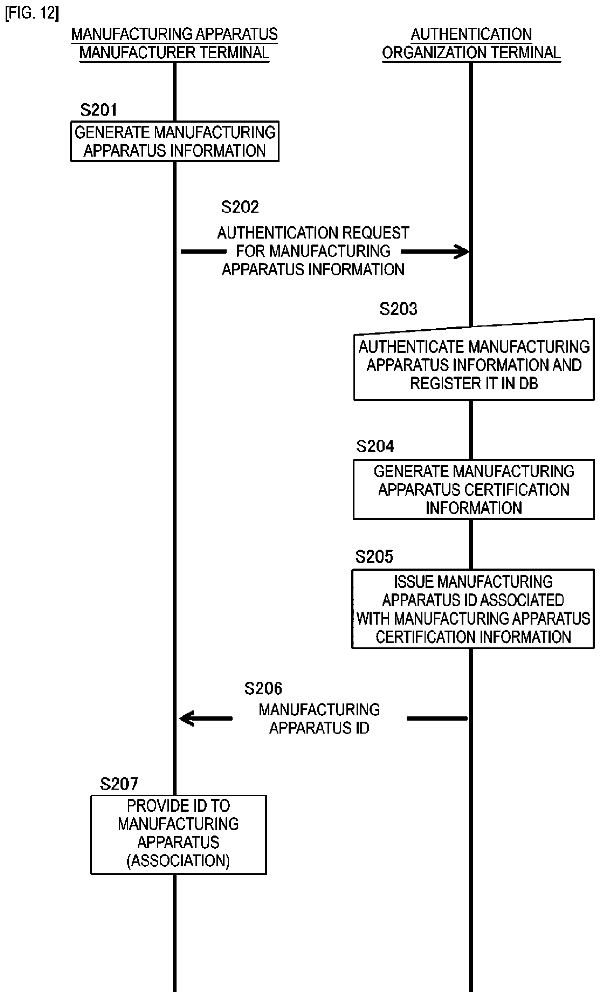

FIG. 12 is a diagram illustrating a subroutine of step S101 in the flowchart of FIG. 11, and illustrating a flow of processing and exchange of information between the authentication organization terminal 10 and the manufacturing apparatus manufacturer terminal 30. As illustrated in FIG. 12, in the manufacturing apparatus manufacturer, manufacturing apparatus information is generated by the manufacturing apparatus information generation unit 301 of the manufacturing apparatus manufacturer terminal 30 when a new manufacturing apparatus is manufactured (S201). Then, the manufacturing apparatus manufacturer terminal 30 transmits an authentication request for the generated manufacturing apparatus information to the authentication organization terminal 10 through the communication unit 310 (S202). The authentication organization terminal 10 receives the request at the authentication request reception unit 101, and the worker on the authentication organization side performs authentication of the manufacturing apparatus information and registers it in the authenticated manufacturing apparatus information DB (S203). Subsequently, the authentication organization terminal 10 generates, at the certification information generation unit 102, manufacturing apparatus certification information that certifies manufacturing apparatus information related to the authentication request (S204), and the ID issuing unit 103 issues a manufacturing apparatus ID associated with the manufacturing apparatus certification information (S205). The issued manufacturing apparatus ID is transmitted to the manufacturing apparatus manufacturer terminal 30 through the communication unit 110 (S206), and the manufacturing apparatus ID association unit 302 of the manufacturing apparatus manufacturer terminal 30 performs processing of association between the manufacturing apparatus ID and the manufacturing apparatus identified by the manufacturing apparatus ID (S207). When the above-described series of processes is executed, the subroutine of step S101 is temporarily terminated.

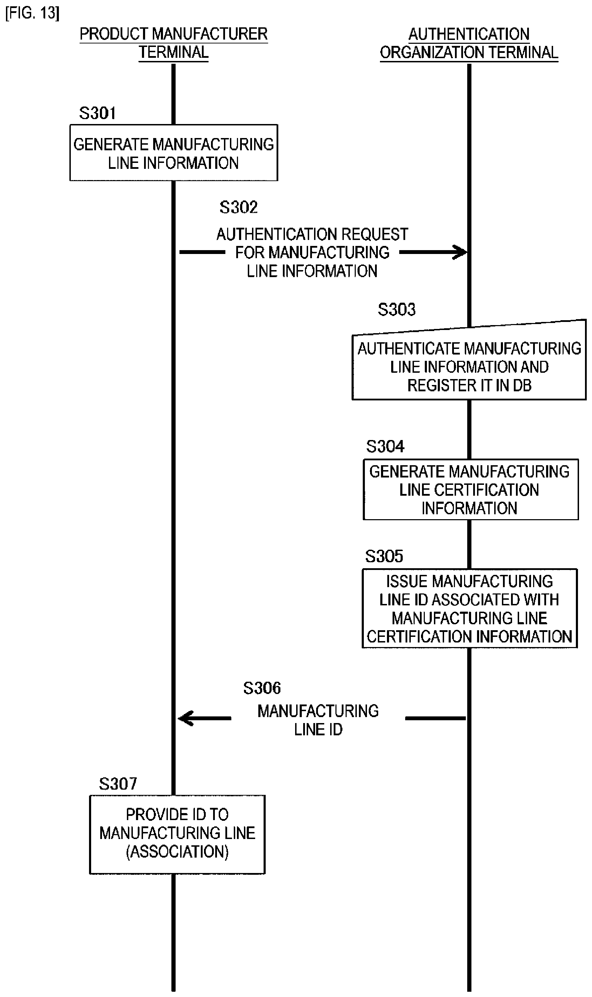

FIG. 13 is a diagram illustrating a subroutine of step S102 in the flowchart of FIG. 11, and illustrating a flow of processing and exchange of information between the authentication organization terminal 10 and the product manufacturer terminal 20. As illustrated in FIG. 13, at the product manufacturer, manufacturing line information is generated at the manufacturing line information generation unit 202 of the product manufacturer terminal 20 when a new manufacturing line is installed (S301). Then, the product manufacturer terminal 20 transmits an authentication request for the generated manufacturing line information to the authentication organization terminal 10 through the communication unit 210 (S302). The authentication organization terminal 10 receives the request at the authentication request reception unit 101, and the worker on the authentication organization side performs authentication of the manufacturing line information and registers it in the authenticated manufacturing line information DB (S303). Subsequently, the authentication organization terminal 10 generates, at the certification information generation unit 102, manufacturing line certification information that certifies manufacturing line information related to the authentication request (S304), and the ID issuing unit 103 issues a manufacturing line ID associated with the manufacturing line certification information (S305). The issued manufacturing line ID is transmitted to the product manufacturer terminal 20 through the communication unit 110 (S306), and the manufacturing line ID association unit 204 of the product manufacturer terminal 20 performs processing of association between the manufacturing line ID and the manufacturing line identified by the manufacturing line ID (S307). When the above-described series of processes is executed, the subroutine of step S102 is temporarily terminated.

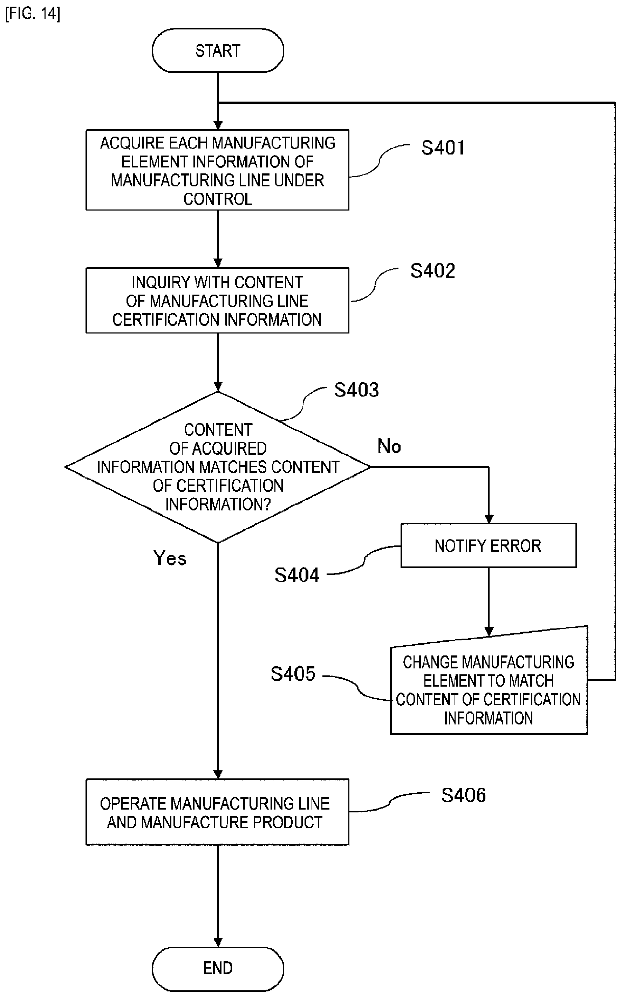

FIG. 14 is a flowchart illustrating a subroutine of step S103 in the flowchart of FIG. 11, and illustrating an example of a flow of processing performed by the control apparatus 22 at the time of startup of the manufacturing line 21 (before the operation of the manufacturing line) at the product manufacturer. As illustrated in FIG. 14, the control apparatus 22 acquires each manufacturing element information about the manufacturing line 21 under its control (S401). Although the manufacturing element information has already been described and thus will not be described in detail here, IDs for identifying the manufacturing apparatus 23 and the sensor device 24 connected thereto, information (ID) about the line operator for the day, and the like are acquired through the communication IF or the input IF, for example.

Next, using the manufacturing line ID of the manufacturing line 21 under its control as the key, the control apparatus 22 refers to the manufacturing line information corresponding to the manufacturing line ID stored in the storage unit 109 of the authentication organization terminal 10 (S402). At this time, it is possible to access the authentication organization terminal 10 through the product manufacturer terminal 20, or directly inquire about the information from the authentication organization terminal 10. In addition, the manufacturing line information is not limitative, and the manufacturing apparatus information of each manufacturing apparatus 23 included in the manufacturing line 21 may also be referenced.

Next, the control apparatus 22 determines whether the content of each manufacturing element of the manufacturing line 21 acquired at step S401 matches the content of the manufacturing line information associated with the manufacturing line certification information (S403). Here, when it is determined that the two pieces of information match, the manufacturing line 21 under its control (more specifically, each manufacturing apparatus 23 included in the manufacturing line 21) is operated to manufacture a product (S406).

On the other hand, when it is determined at step S403 that the contents of the two pieces of information do not match, the control apparatus 22 notifies error information (S404) and suspends the operation of the manufacturing line 21. In this case, the line operator 25 changes each manufacturing element of the manufacturing line 21 to match the manufacturing line information associated with the manufacturing line certification information (S405), and then the process is returned to step S401 to repeat the subsequent processes, for example. In this manner, the content of each manufacturing element of the manufacturing line 21 matches the content of the manufacturing line information associated with the manufacturing line certification information, and thus the manufacturing line can be operated. When the above-described series of processes is executed, the subroutine of step S103 is completed.

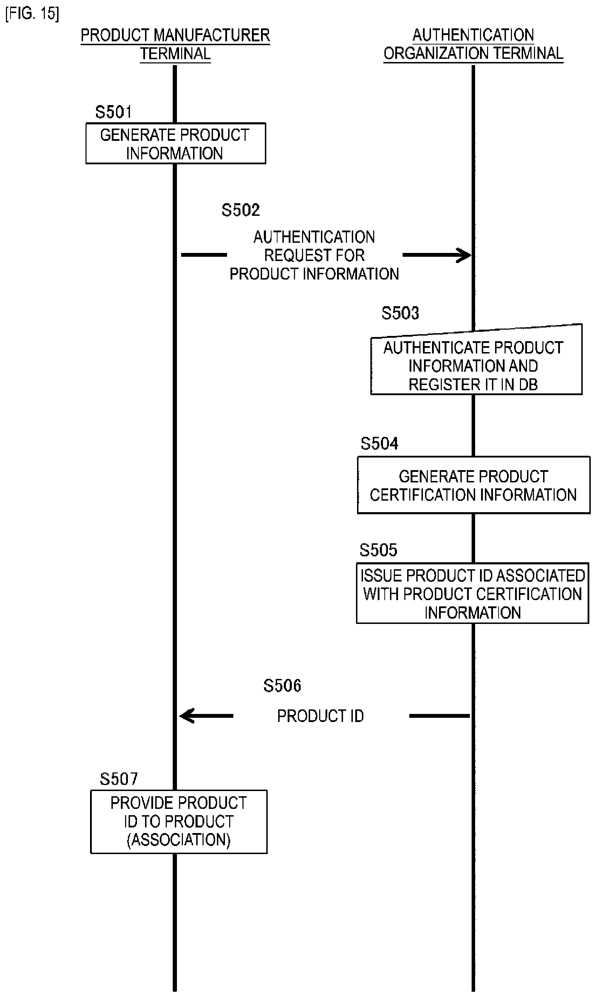

FIG. 15 is a diagram illustrating a subroutine of step S104 in the flowchart of FIG. 11, and illustrating a flow of processing and exchange of information between the authentication organization terminal 10 and the product manufacturer terminal 20. As illustrated in FIG. 15, at the product manufacturer, when a new product is manufactured, the product information generation unit 201 of the product manufacturer terminal 20 generates product information (S501). Then, the product manufacturer terminal 20 transmits an authentication request for generated product information to the authentication organization terminal 10 through the communication unit 210 (S502). The authentication organization terminal 10 receives the request at the authentication request reception unit 101, and the worker on the authentication organization side performs the authentication of the product information and registers it in the authenticated product information DB (S503). Subsequently, the authentication organization terminal 10 generates, at the certification information generation unit 102, product certification information that certifies product information related to the authentication request (S504), and the ID issuing unit 103 issues the product ID associated with the product certification information (S505). The issued product ID is transmitted to the product manufacturer terminal 20 through the communication unit 110 (S506), and the product ID association unit 203 of the product manufacturer terminal 20 performs processing of association between the product ID and the product identified by the product ID (S507). When the above-described series of processes is executed, the subroutine of step S104 is temporarily terminated.

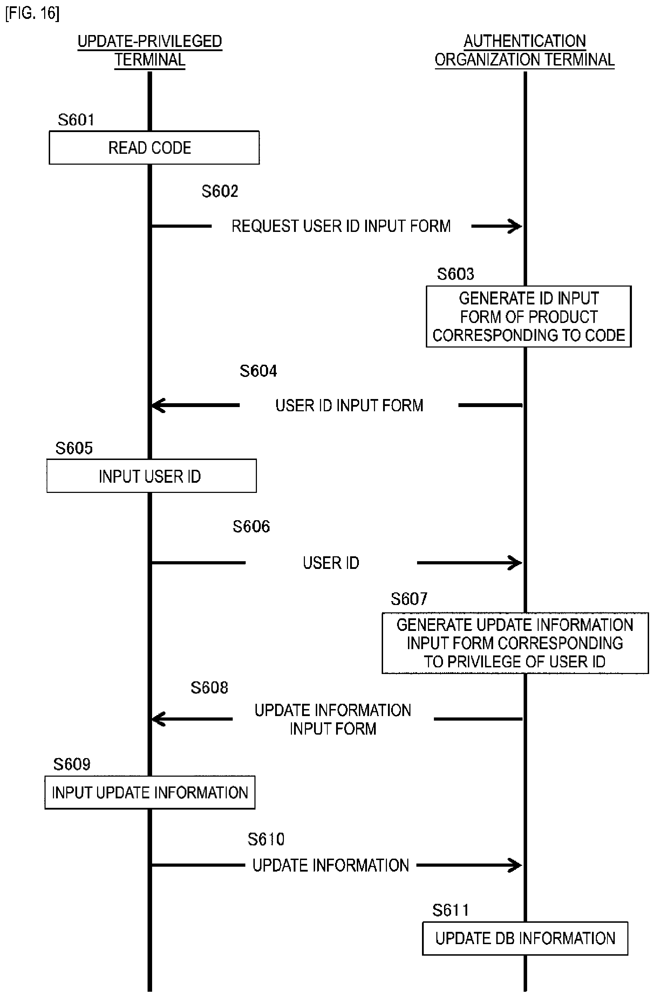

Returning to the processing flow of FIG. 11, at step S105, the authentication organization terminal 10 (more specifically, the information update reception unit 105) determines whether there is an update request for the authenticated product information, the authenticated manufacturing line information, and the authenticated manufacturing apparatus information stored in the storage unit 109. The following describes a flow of processing in the case where there is a request for information update. FIG. 16 is a diagram illustrating a flow of processing and exchange of information between the authentication organization terminal 10 and the update-privileged terminal 40.

Note that the following describes an example in which the product is provided with a code in which information including the product ID is encoded. In the case where the business operator related to the distribution of the product wishes to update the product information, the code attached to the product is read using a code reading unit (e.g., camera) serving as the input unit 407 of the update-privileged terminal 40 (S601). Then, the encoded information is decoded by the information update request unit 402, and based on it, request information for the input form of the user ID is transmitted to the authentication organization terminal 10 (S602). When receiving the request for the input form, the information update reception unit 105 of the authentication organization terminal 10 generates the input form for the user ID corresponding to the product ID included in the code (S603) and transmits it to the update-privileged terminal 40 (S604). When receiving the form, the input form for the user ID and the password is displayed on the output unit 408 of the update-privileged terminal 40. When the user ID is input to the form through the input unit 407 of the update-privileged terminal 40 (S605), information about the user ID (and the password) is transmitted to the authentication organization terminal 10 through the communication unit 410 (S606). In the authentication organization terminal 10 having received the user ID, the information update reception unit 105 generates an input form for the update information corresponding to the privilege associated with the transmitted user ID (S607) and transmits the input form to the update-privileged terminal 40 (S608). In the update-privileged terminal 40 having received the input form for the update information, the input form is displayed by the output unit 408. Then, when the update information is input through the input unit 407 of the update-privileged terminal 40 (S609), the update information is transmitted to the authentication organization terminal 10 through the communication unit 410 (S610). In the authentication organization terminal 10 having received the update information, the information update reception unit 105 updates the authenticated product information stored in the storage unit 109 (S611), and thus the series of processes of the subroutine of step S106 is completed.

Note that while an example of information update processing performed by (the information update request unit 402 of) the update-privileged terminal 40 has been described above, similar processing can be implemented also at (the information update request unit 206 of) the product manufacturer terminal 20 and (the information update request unit 304 of) the manufacturing apparatus manufacturer terminal 30. In addition, while product information has been described above as an example, similar processing can be implemented also for manufacturing line information and manufacturing apparatus information.

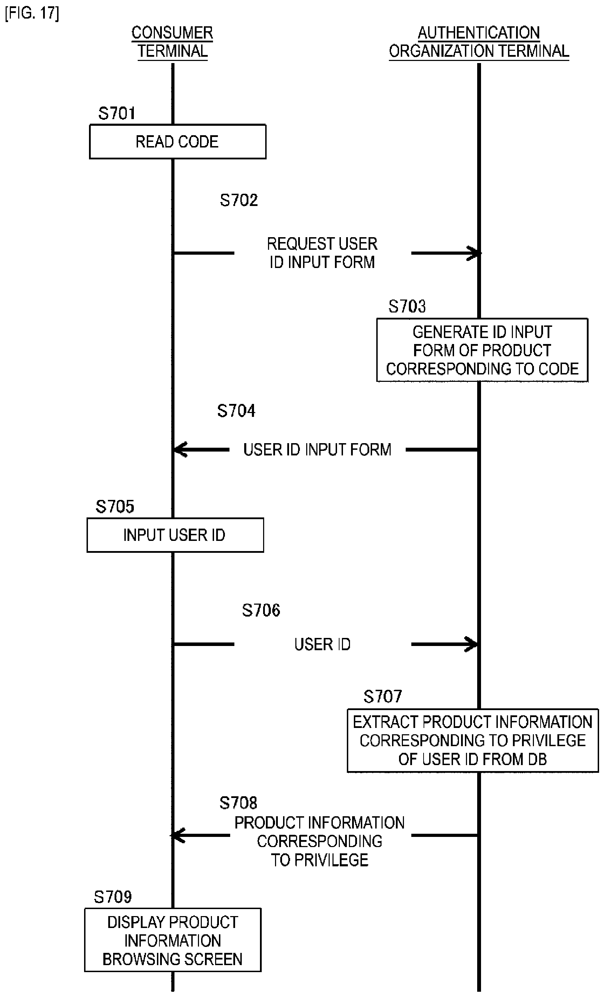

Returning to the flow of FIG. 11 again, at step S107, the authentication organization terminal 10 (more specifically, the information browsing request reception unit 104) determines whether there is a browsing request for the authenticated product information, the authenticated manufacturing line information, and the authenticated manufacturing apparatus information stored in the storage unit 109. The following describes a flow of processing in the case where there is a request for information browsing. FIG. 17 is a diagram illustrating a flow of processing and exchange of information between the authentication organization terminal 10 and the consumer terminal 50.

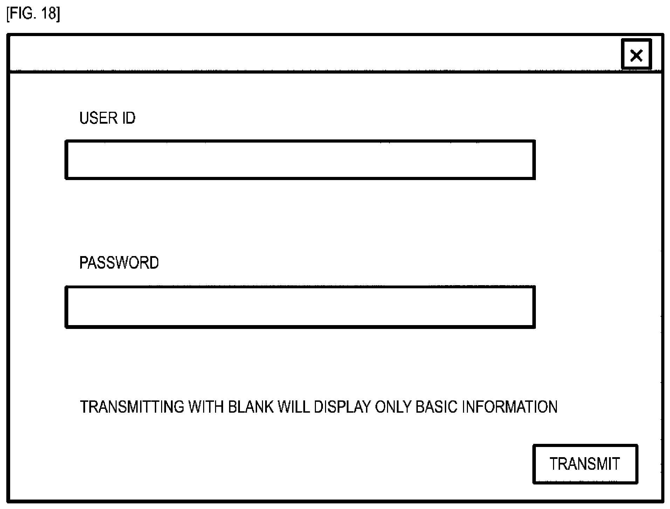

Note that the following describes an example in which the product is provided with a code in which information including the product ID is encoded. When the consumer who has obtained the product wishes to browse the product information, the code attached to the product is read using a code reading unit (e.g., camera) serving as the input unit 507 of the consumer terminal 50 (S701). Then, the encoded information is decoded by the information browsing request unit 501, and based on it, request information for the input form of the user ID is transmitted to the authentication organization terminal 10 (S702). When receiving the request for the input form, the information browsing request reception unit 104 of the authentication organization terminal 10 generates the input form for the user ID corresponding to the product ID included in the code (S703) and transmits it to the consumer terminal 50 (S704). When receiving the form, the input form for the user ID and the password is displayed on the output unit 508 of the consumer terminal 50. FIG. 18 illustrates an example of an input form for a user ID and a password.

When the user ID (and the password) is input to the form through the input unit 507 of the consumer terminal 50 (S705), information about the user ID (and the password) is transmitted to the authentication organization terminal 10 through the communication unit 510 (S706). In the authentication organization terminal 10 having received the user ID, the information browsing request reception unit 104 extracts the product information corresponding to the privilege associated with the transmitted user ID from the storage unit 109 (S707) and transmits the information to the consumer terminal 50 (S708). In the consumer terminal 50 having received the product information, the browsing screen of the product information is displayed by the output unit 508 (S709), and thus the series of processes of the subroutine of step S108 is completed.

Note that in the information processing system 1 according to the present embodiment, as illustrated in FIG. 18, information that can be browsed by a person who does not have the privilege is displayed even when the transmission button is pressed without inputting the user ID or the password. In this manner, even a user who does not have the user ID, such as a general consumer, can browse basic information among product information.

In addition, while an example of information browsing processing performed by (the information browsing request unit 501 and the output unit 508 of) the consumer terminal 50 has been described above, similar processing can be implemented also at (the information browsing request unit 205 and the output unit 208 of) the product manufacturer terminal 20, (the information browsing request unit 303 and the output unit 308 of) the manufacturing apparatus manufacturer terminal 30, and (the information browsing request unit 401 and the output unit 408 of) the update-privileged terminal 40. In addition, while product information has been described above as an example, similar processing can be implemented also for manufacturing line information and manufacturing apparatus information. Specifically, in the present embodiment, any of the output units 208, 308, 408 and 508 may serve as the first output unit, the second output unit, and the third output unit of the present invention in accordance with the content of information about the output request and the terminal that has made the output request.

Returning to the flow illustrated in FIG. 11, when a NO determination is made at step S107, and after the processing of step S108 has been completed, the authentication organization terminal 10 returns to step S105, and the subsequent processes are repeated until a predetermined completion condition is satisfied. It should be noted that the above-described flow of processing is an example, and it is possible to adopt a routine that does not include some or all of the processing of step S101, step S102, step S103, step S105, step S106, and the like.

With the above-described information processing system 1 according to the present embodiment, output (browsing) of information about the product and each element related to the manufacture of the product is enabled for the user of an information processing network to which a plurality of terminals are connected, and the authenticity of the information to be browsed can be continuously ensured. That is, it is possible to acquire highly reliable information about the reliability of the linkage of information, including not only the authenticity of the provider and the content of the information to be browsed, but also the authenticity of the provider and the content of information on which the information to be browsed is based or which it references (and further, of underlying/reference information traced back from that information). In this manner, for example, a general consumer can browse, from the consumer's own terminal, highly reliable product information (e.g., energy consumption related to manufacturing the product, a producer, and the like) for which even the underlying information (and transitions thereof) has been authenticated, and manufacturers, logistics operators, retailers, and the like can also acquire highly reliable product information from their respective terminals.

In addition, as in the present embodiment, with the configuration in which the control apparatus 22 determines, at the time of startup of the manufacturing line 21, whether the content of each manufacturing element of the manufacturing line to which the manufacturing apparatus under its control belongs is the same as the content of the authenticated manufacturing line information such that the manufacturing apparatus is not operated when they are not the same, if unexpected specification changes or replacement of manufacturing devices occurs in the manufacturing line or the manufacturing apparatus, it is possible to prevent the product from being manufactured using the manufacturing line or the manufacturing apparatus that differs from the authenticated content. That is, with respect to the product information, it is possible to provide a system that not only has tamper resistance against the information itself (by means of the certification information) but also can prevent the content ensured by the certification information from being unintentionally changed (tampered with).

In addition, in the present embodiment, the manufacturing line information is generated and managed for each of a plurality of manufacturing lines 21 even if the production site is the same. Accordingly, for example, even in the same factory, when differences exist in energy-saving performance of the manufacturing apparatus or in a breakdown of types of electric power used, the user can grasp, on a per-product basis, differences in the amount of energy consumed in the manufacturing process even if products having the same quality as final products are manufactured.

In addition, by adding information about the line operator as a manufacturing element included in the manufacturing line information, it becomes possible to determine whether the product has been manufactured through labor under illegal working conditions such as forced labor or improper child labor, for example.

### (Modification 1)

Note that in the above-mentioned Embodiment 1, the product information, the manufacturing line information, and the manufacturing apparatus information that are authenticated (specifically, associated with certification information) are stored in the storage unit 109 of the authentication organization terminal 10 as a DB, but the configuration is not necessarily limited thereto. For example, the product information and the manufacturing line information associated with the certification information in the authentication organization terminal 10 may be stored in the storage unit 209 of the product manufacturer terminal 20 as a DB. Likewise, the manufacturing apparatus information associated with the certification information in the authentication organization terminal 10 may be stored in the storage unit 309 of the manufacturing apparatus manufacturer terminal 30 as a DB.

In this case, when a browsing request and/or an update request for information is made from each terminal, the authentication organization terminal 10 may serve to enable access to corresponding product information, manufacturing line information, and manufacturing apparatus information using the product ID, the manufacturing line ID, and the manufacturing apparatus ID as the key.

### (Modification 2)

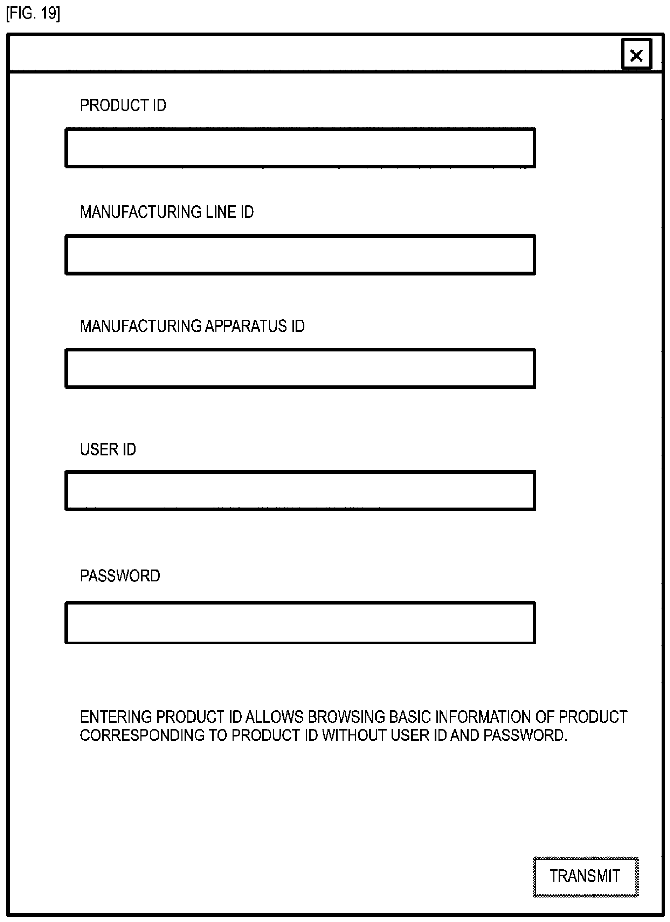

In addition, in the above-mentioned embodiment, a code encoded to include the product ID information is attached to the product and an input form for browsing and/or update of product information is accessed by reading the code, but browsing and/or update of information can be implemented by other methods. For example, a common input form for ID input may be published in advance on the Internet so as to display information and/or display an information update form corresponding to the privilege by receiving ID input through the input form. An example of such a common ID input form is illustrated in FIG. 19.

### (Modification 3)

In addition, in the above embodiment, the information browsing request reception unit 104 also serves as the first reception unit, the second reception unit, the third reception unit, and the fifth reception unit, but an authentication organization terminal 11 may include a reception unit corresponding to each of the first reception unit, the second reception unit, the third reception unit, and the fifth reception unit. In addition, the information browsing request reception unit 104 may (simultaneously) receive output requests for a plurality of pieces of information, or individually receive an output request for individual information. Note that the same applies to the certification information generation unit 102, which may be configured not only to serve as the first generation unit, the second generation unit, and the third generation unit, but also to include generation units corresponding to these units.

### <Embodiment 2>

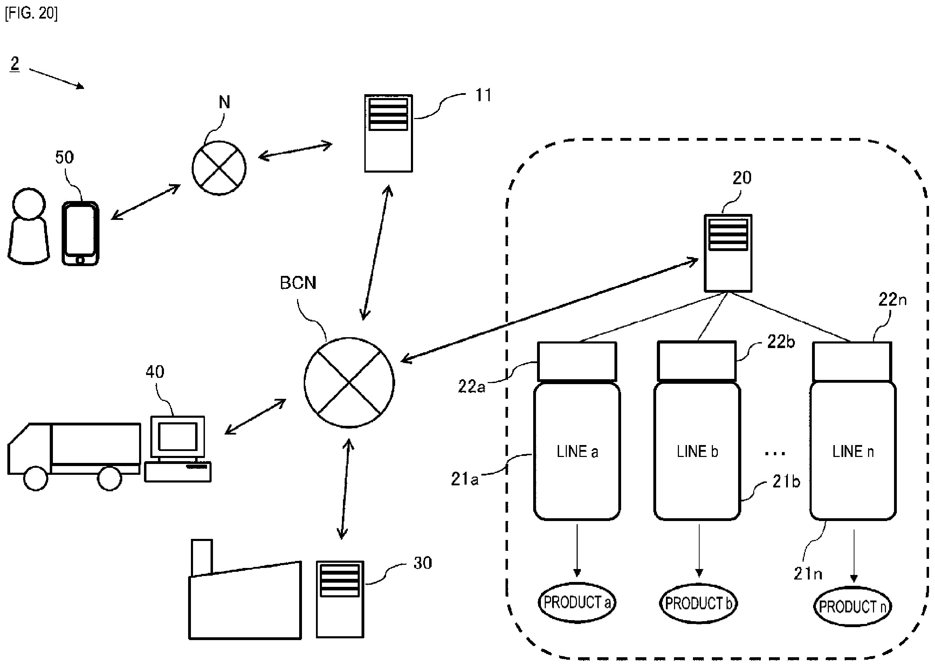

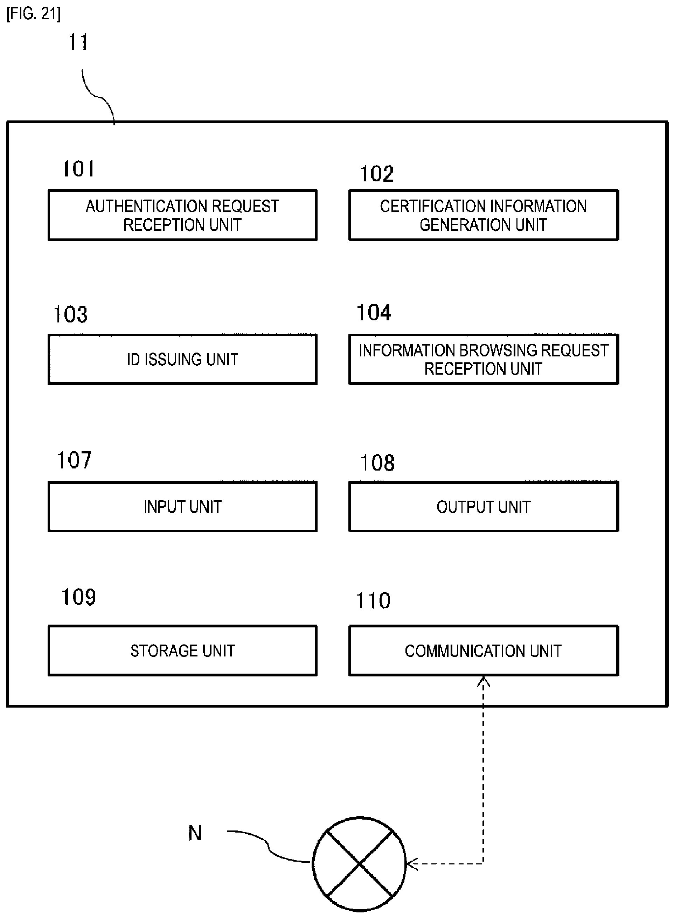

Next, another embodiment of the present invention is described below with reference to FIGS. 20 and 21. FIG. 20 is a schematic view illustrating a schematic configuration of an information processing system 2 according to the present embodiment. Note that in the following description, the same components and processing as those of the information processing system 1 of Embodiment 1 are denoted with the same reference numerals, and redundant descriptions thereof will be omitted. As illustrated in FIG. 20, the information processing system 2 according to the present embodiment is different from the information processing system 1 according to Embodiment 1 in that the authentication organization terminal 11, the product manufacturer terminal 20, the manufacturing apparatus manufacturer terminal 30, and the update-privileged terminal 40 are connected to the blockchain network BCN, and that the consumer terminal 50 and the authentication organization terminal 11 are connected by a general-purpose communication network N.

In the information processing system 2 according to the present embodiment, a blockchain system, which is one of distributed ledger technologies, is used to manage a product ID, product information, product certification information, a manufacturing line ID, manufacturing line information, manufacturing line certification information, a manufacturing apparatus ID, manufacturing apparatus information, and manufacturing apparatus certification information.

Note that a blockchain system is a system including a plurality of node apparatuses connected to a blockchain network in which information is managed in a peer-to-peer (P2P) manner, the plurality of node apparatuses distributively sharing (store and manage) various types of information. Since the blockchain system is a publicly known technique, a detailed description thereof is omitted.

In the present embodiment, the authentication organization terminal 11, the product manufacturer terminal 20, the manufacturing apparatus manufacturer terminal 30, and the update-privileged terminal 40 each corresponds to a node apparatus of the blockchain network BCN. In addition, other information processing terminals may be included as node apparatuses. In the information processing system 2 according to the present embodiment, there is no database in the authentication organization terminal 11, and a variety of information such as product information, manufacturing line information, and manufacturing apparatus information is distributively stored in (storage units of) the terminals serving as node apparatuses. Specifically, for example, product information according to the present embodiment is retained in the form of a block storing a timestamp at the time of generation (or update) of the content in each node apparatus, a hash value determined by a hash function according to the content and indicating the content of the immediately preceding block, the content of the product information, and product certification information that certifies the product information (at the time of initial generation). Note that the product information retained in the block may be a key (e.g., an ID) associated with the body of information in which each piece of product element information is separately retained.

Each block is sequentially newly created so as to be associated with the immediately preceding block. Specifically, when product information is updated, a new block including, as a set, a timestamp at that time, a hash value of the information before being updated, the updated product information, and product certification information is newly created in association with the previous block.

Since such a blockchain is created in each node apparatus, when information is updated, the fact and the appropriateness of the update are constantly visualized for participants in the system.

FIG. 21 is a functional block diagram of the authentication organization terminal 11 according to the present embodiment. As illustrated in FIG. 21, the authentication organization terminal 11 according to the present embodiment has substantially the same functional units as those of the authentication organization terminal 10 according to Embodiment 1, but does not include the information update reception unit 105. This is because, in the information processing system 2 according to the present embodiment, regarding update and browsing of information from the product manufacturer terminal 20, the manufacturing apparatus manufacturer terminal 30, and the update-privileged terminal 40, update can be performed by directly reading information from the blockchain network BCN. Specifically, in the present embodiment, each node apparatus constituting the blockchain network BCN corresponds to the first reception unit, the second reception unit, the third reception unit, the fourth reception unit, and the fifth reception unit according to the present invention.

On the other hand, the consumer terminal 50, which does not generate or update information processed in the information processing system 2, is disconnected from the blockchain network BCN, and is configured to receive provision of information managed in the blockchain network BCN through the authentication organization terminal 11. In this case, the flow of an information browsing request is substantially the same as that in the first embodiment, and differs only in that the authentication organization terminal 11 does not extract the information related to the request from a database in its own storage unit but instead acquires the information from the blockchain network BCN and provides the information to the consumer terminal 50.

With the information processing system 2 according to the present embodiment as described above, using a blockchain system eliminates the need for a database, thereby enabling construction of a stable system that is robust against system downtime. In addition, if unauthorized updating (tampering) of information occurs, the fact can be readily detected, and thus a system with strong tamper resistance can be provided.

### <Others>

The descriptions of the respective examples above are merely illustrative descriptions of the present invention, and the present invention is not limited to the specific embodiments described above. Various modifications and combinations are possible for the present invention within the scope of its technical concept. For example, in the above embodiment, the control apparatus 22 may be connected directly to the communication network N (or the blockchain network BCN) without going through the product manufacturer terminal 20.

In addition, in the first embodiment described above, a product ID for identifying each product is issued individually in accordance with each request for authentication of product information; however, it can naturally be assumed that a plurality (a large number) of products having the same content of product information to be certified are manufactured. In such a case, it is inefficient to perform authentication and issuance of a product ID for each individual piece of product information on a one-by-one basis. Therefore, in the authentication organization terminal, for product information having the same content to be certified, a plurality of product IDs associated with the single piece of product information to be certified may be issued, and the product IDs may be transmitted in advance to the product manufacturer terminal. In this manner, when manufacturing products corresponding to product information having the same content, it is not necessary to request issuance of a product ID each time, and thus a system with excellent convenience can be provided. However, in this case, if the product manufacturer improperly diverts product IDs, the reliability of the system is significantly impaired; therefore, a mechanism for ensuring reliability is required, such as limiting the target to only reliable, trustworthy product manufacturers (that have been authenticated as trustworthy).

In addition, the information processing system may be configured such that the product manufacturer terminal includes an ID issuing unit for a product, and the authentication organization terminal includes a product ID association unit. Specifically, it is possible to adopt a configuration in which after the product manufacturer assigns an ID (e.g., a serial number) to a product to be manufactured (at this stage, the product and the ID are not associated with the product certification information), the authentication organization authenticates the product information in response to a request from the product manufacturer terminal, and the authentication organization terminal generates product certification information and associates the product certification information with the (reported) product ID. The same applies to a manufacturing line ID and a manufacturing apparatus ID.

### <Supplementary Note 1>

An information processing system (1, 2) including a plurality of information processing terminals connected to each other through a communication network and configured to process information related to a product, the information processing system including:
a first generation unit (102) configured to generate product certification information that certifies product information, the product information including one or more pieces of product element information representing each element related to manufacture of the product;
a first associating unit (203) configured to associate a product ID with the product identified by the product ID, the product ID being associated with the product information certified by the product certification information and configured to identify the product;
a first reception unit (104) configured to receive a first output request, based on the product ID, the first output request being an output request for the product information; and
a first output unit (108, 208, 308, 408, 508) configured to output at least a part of the product information corresponding to the first output request.

### <Supplementary Note 2>

The information processing system according to Supplementary Note 1, in which at least one of the product information, the product certification information, or the product ID is processed by a distributed ledger method.

### <Supplementary Note 3>

The information processing system according to Supplementary Note 1 or 2, in which the product information includes, as the product element information, at least information about energy consumption related to the manufacture of the product.

### <Supplementary Note 4>

The information processing system according to any one of Supplementary Notes 1 to 3, further including:
a second generation unit (102) configured to generate manufacturing line certification information that certifies manufacturing line information including one or more pieces of manufacturing element information representing each element constituting a manufacturing line related to the manufacture of the product;
a second associating unit (204) configured to associate a manufacturing line ID with the manufacturing line identified by the manufacturing line ID, the manufacturing line ID being associated with the manufacturing line information certified by the manufacturing line certification information and configured to identify the manufacturing line;
a second reception unit (104) configured to receive a second output request, based on the manufacturing line ID, the second output request being an output request for the manufacturing line information; and
a second output unit (108, 208, 308, 408, 508) configured to output at least a part of the manufacturing line information corresponding to the second output request, in which
the product information includes at least the manufacturing line ID as the product element information.

### <Supplementary Note 5>

The information processing system according to Supplementary Note 4, in which the manufacturing line information includes, as the manufacturing element information, at least information about a type of energy consumed in the manufacturing line.

### <Supplementary Note 6>

The information processing system according to Supplementary Note 4 or 5, further including:
a third generation unit (102) configured to generate manufacturing apparatus certification information that certifies manufacturing apparatus information including one or more pieces of information about a specification of a manufacturing apparatus constituting the manufacturing line;
a third associating unit (302) configured to associate a manufacturing apparatus ID with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third reception unit (104) configured to receive a third output request, based on the manufacturing apparatus ID, the third output request being an output request for the manufacturing apparatus information; and
a third output unit (108, 208, 308, 408, 508) configured to output at least a part of the manufacturing apparatus information corresponding to the third output request, in which
the manufacturing line information includes at least the manufacturing apparatus ID as the manufacturing element information.

### <Supplementary Note 7>

The information processing system according to Supplementary Note 6, in which the manufacturing apparatus information includes, as the specification of the manufacturing apparatus, at least information about energy-saving performance of the manufacturing apparatus.

### <Supplementary Note 8>

The information processing system according to Supplementary Note 6 or 7, further including a control unit (22) configured to control the manufacturing apparatus constituting the manufacturing line, in which
the control unit does not operate the manufacturing apparatus to be controlled when the specification of the manufacturing apparatus to be controlled does not match a content certified by the manufacturing apparatus certification information associated with the manufacturing apparatus ID provided to the manufacturing apparatus or when each element constituting the manufacturing line where the manufacturing apparatus to be controlled belongs does not match a content certified by the manufacturing line certification information associated with the manufacturing line ID provided to the manufacturing line.

### <Supplementary Note 9>

The information processing system according to any one of Supplementary Notes 1 to 8, further including a fourth reception unit (105) configured to receive an update of at least the product information on condition that an updater ID associated with a privilege for the update of at least the product information and configured to individually identify a user who performs the update is input, in which
when the update is received, the fourth reception unit adds, to the product information, the updater ID of a user who has performed the update and an update time.

### <Supplementary Note 10>

The information processing system according to any one of Supplementary Notes 1 to 9, including a fifth reception unit (104) configured to receive an input of a viewer ID associated with at least a browsing privilege for the product information and configured to individually identify a user who performs browsing, in which
when the fifth reception unit receives the input of the viewer ID, the first output unit outputs the product information that is allowed to be browsed based on the browsing privilege associated with the viewer ID.

### <Supplementary Note 11>

An information processing method for processing information related to a product, with a plurality of information processing terminals connected to each other through a communication network, the information processing method including:
a first generating step (S503) of generating product certification information that certifies product information, the product information including one or more pieces of product element information representing each element related to manufacture of the product;
a first associating step (S507) of associating a product ID with the product identified by the product ID, the product ID being associated with the product information certified by the product certification information and configured to identify the product;
a first receiving step (S703, S707) of receiving a first output request, based on the product ID, the first output request being an output request for the product information; and
a first outputting step (S709) of outputting at least a part of the product information corresponding to the first output request.

### <Supplementary Note 12>

The information processing method according to Supplementary Note 11, further including:
a second generating step (S304) of generating manufacturing line certification information that certifies manufacturing line information including one or more pieces of manufacturing element information representing each element constituting a manufacturing line related to the manufacture of the product;
a second associating step (S307) of associating a manufacturing line ID with the manufacturing line identified by the manufacturing line ID, the manufacturing line ID being associated with the manufacturing line information certified by the manufacturing line certification information and configured to identify the manufacturing line;
a second receiving step (S108) of receiving a second output request, based on the manufacturing line ID, the second output request being an output request for the manufacturing line information; and
a second outputting step (S108) of outputting at least a part of the manufacturing line information corresponding to the second output request, in which
the product information includes at least the manufacturing line ID as the product element information.

### <Supplementary Note 13>

The information processing method according to Supplementary Note 12, further including:
a third generating step (S204) of generating manufacturing apparatus certification information that certifies manufacturing apparatus information including one or more pieces of information about a specification of a manufacturing apparatus constituting the manufacturing line;
a third associating step (S207) of associating a manufacturing apparatus ID with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third receiving step (S108) of receiving a third output request, based on the manufacturing apparatus ID, the third output request being an output request for the manufacturing apparatus information; and
a third outputting step (S108) of outputting at least a part of the manufacturing apparatus information corresponding to the third output request, in which
the manufacturing line information includes at least the manufacturing apparatus ID as the manufacturing element information.

### REFERENCE SIGNS

1, 2 ... Information processing system
10, 11 ... Authentication organization terminal
20 ... Product manufacturer terminal
21, 21a, 21b, 21n ... Manufacturing line
22, 22a, 22b, 22n ... Control apparatus
23, 23a, 23b, 23n ... Manufacturing apparatus
24, 24a, 24b, 24n ... Sensor device
25 ... Line operator
30 ... Manufacturing apparatus manufacturer terminal
40 ... Update-privileged terminal
50 ... Consumer terminal
90 ... Bus
91 ... Processor
92 ... Memory
93 ... Input IF
94 ... Output IF
N ... Communication network
BCN ... Blockchain network

## Claims

1. An information processing system including a plurality of information processing terminals connected to each other through a communication network and configured to process information related to a product, the information processing system comprising:
a first generation unit configured to generate product certification information that certifies product information, the product information including one or more pieces of product element information representing each element related to manufacture of the product;
a first associating unit configured to associate a product ID with the product identified by the product ID, the product ID being associated with the product information certified by the product certification information and configured to identify the product;
a first reception unit configured to receive a first output request, based on the product ID, the first output request being an output request for the product information; and
a first output unit configured to output at least a part of the product information corresponding to the first output request.

2. The information processing system according to claim 1, wherein at least one of the product information, the product certification information, or the product ID is processed by a distributed ledger method.

3. The information processing system according to claim 1, wherein the product information includes, as the product element information, at least information about energy consumption related to the manufacture of the product.

4. The information processing system according to claim 1, further comprising:
a second generation unit configured to generate manufacturing line certification information that certifies manufacturing line information including one or more pieces of manufacturing element information representing each element constituting a manufacturing line related to the manufacture of the product;
a second associating unit configured to associate a manufacturing line ID with the manufacturing line identified by the manufacturing line ID, the manufacturing line ID being associated with the manufacturing line information certified by the manufacturing line certification information and configured to identify the manufacturing line;
a second reception unit configured to receive a second output request, based on the manufacturing line ID, the second output request being an output request for the manufacturing line information; and
a second output unit configured to output at least a part of the manufacturing line information corresponding to the second output request, wherein
the product information includes at least the manufacturing line ID as the product element information.

5. The information processing system according to claim 4, wherein the manufacturing line information includes, as the manufacturing element information, at least information about a type of energy consumed in the manufacturing line.

6. The information processing system according to claim 4, further comprising:
a third generation unit configured to generate manufacturing apparatus certification information that certifies manufacturing apparatus information including one or more pieces of information about a specification of a manufacturing apparatus constituting the manufacturing line;
a third associating unit configured to associate a manufacturing apparatus ID with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third reception unit configured to receive a third output request, based on the manufacturing apparatus ID, the third output request being an output request for the manufacturing apparatus information; and
a third output unit configured to output at least a part of the manufacturing apparatus information corresponding to the third output request, wherein
the manufacturing line information includes at least the manufacturing apparatus ID as the manufacturing element information.

7. The information processing system according to claim 6, wherein the manufacturing apparatus information includes, as the specification of the manufacturing apparatus, at least information about energy-saving performance of the manufacturing apparatus.

8. The information processing system according to claim 6, further comprising a control unit configured to control the manufacturing apparatus constituting the manufacturing line, wherein
the control unit does not operate the manufacturing apparatus to be controlled when the specification of the manufacturing apparatus to be controlled does not match a content certified by the manufacturing apparatus certification information associated with the manufacturing apparatus ID provided to the manufacturing apparatus or when each element constituting the manufacturing line where the manufacturing apparatus to be controlled belongs does not match a content certified by the manufacturing line certification information associated with the manufacturing line ID provided to the manufacturing line.

9. The information processing system according to claim 1, further comprising a fourth reception unit configured to receive an update of at least the product information on condition that an updater ID associated with a privilege for the update of at least the product information and configured to individually identify a user who performs the update is input, wherein
when the update is received, the fourth reception unit adds, to the product information, the updater ID of a user who has performed the update and an update time.

10. The information processing system according to claim 1, comprising a fifth reception unit configured to receive an input of a viewer ID associated with at least a browsing privilege for the product information and configured to individually identify a user who performs browsing, wherein
when the fifth reception unit receives the input of the viewer ID, the first output unit outputs the product information that is allowed to be browsed based on the browsing privilege associated with the viewer ID.

11. An information processing method for processing information related to a product, with a plurality of information processing terminals connected to each other through a communication network, the information processing method comprising:
a first generating step of generating product certification information that certifies product information, the product information including one or more pieces of product element information representing each element related to manufacture of the product;
a first associating step of associating a product ID with the product identified by the product ID, the product ID being associated with the product information certified by the product certification information and configured to identify the product;
a first receiving step of receiving a first output request, based on the product ID, the first output request being an output request for the product information; and
a first outputting step of outputting at least a part of the product information corresponding to the first output request.

12. The information processing method according to claim 11, further comprising:
a second generating step of generating manufacturing line certification information that certifies manufacturing line information including one or more pieces of manufacturing element information representing each element constituting a manufacturing line related to the manufacture of the product;
a second associating step of associating a manufacturing line ID with the manufacturing line identified by the manufacturing line ID, the manufacturing line ID being associated with the manufacturing line information certified by the manufacturing line certification information and configured to identify the manufacturing line;
a second receiving step of receiving a second output request, based on the manufacturing line ID, the second output request being an output request for the manufacturing line information; and
a second outputting step of outputting at least a part of the manufacturing line information corresponding to the second output request, wherein
the product information includes at least the manufacturing line ID as the product element information.

13. The information processing method according to claim 12, further comprising:
a third generating step of generating manufacturing apparatus certification information that certifies manufacturing apparatus information including one or more pieces of information about a specification of a manufacturing apparatus constituting the manufacturing line;
a third associating step of associating a manufacturing apparatus ID with the manufacturing apparatus identified by the manufacturing apparatus ID, the manufacturing apparatus ID being associated with the manufacturing apparatus information certified by the manufacturing apparatus certification information and configured to identify the manufacturing apparatus;
a third receiving step of receiving a third output request, based on the manufacturing apparatus ID, the third output request being an output request for the manufacturing apparatus information; and
a third outputting step of outputting at least a part of the manufacturing apparatus information corresponding to the third output request, wherein
the manufacturing line information includes at least the manufacturing apparatus ID as the manufacturing element information.
